# EUROPÄISCHE PATENTSCHRIFT

(11) **EP 3 899 629 B1**
(45) Veröffentlichungstag und Bekanntmachung des Hinweises auf die Patenterteilung: **05.06.2024**
(21) Anmeldenummer: 19832702.5
(22) Anmeldetag: 23.12.2019
(51) Int. Cl.: G02B 21/00, G02B 27/58

(54) **VERFAHREN UND VORRICHTUNG ZUM PUNKTFÖRMIGEN BELEUCHTEN EINER PROBE IN EINEM MIKROSKOP**
METHOD AND DEVICE FOR ILLUMINATING A SAMPLE IN A MICROSCOPE IN POINTS
PROCÉDÉ ET DISPOSITIF D'ÉCLAIRAGE PONCTUEL D'UN ÉCHANTILLON DANS UN MICROSCOPE

(30) Priorität: 21.12.2018 LU 101084
(43) Veröffentlichungstag der Anmeldung: 27.10.2021
(73) Patentinhaber: Abberior Instruments GmbH, 37077 Göttingen (DE)
(72) Erfinder: HARKE, Benjamin, 37083 Göttingen (DE); KASTRUP, Lars, 37073 Göttingen (DE)
(74) Vertreter: Hoffmann, Jürgen
(86) Internationale Anmeldenummer: PCT/EP2019/086988
(87) Internationale Veröffentlichungsnummer: WO 2020/128106

(56) Entgegenhaltungen:
- WO-A1-2015/022145
- Klaus C. Gwosch ET AL: "MINFLUX nanoscopy delivers multicolor nanometer 3D-resolution in (living) cells", bioRxiv, 13. August 2019 (2019-08-13), XP055678963, DOI: 10.1101/734251 Gefunden im Internet: URL:https://www.biorxiv.org/content/10.110 1/734251v1.full.pdf [gefunden am 2020-03-23]

## Beschreibung

Die Erfindung betrifft ein Verfahren zum punktförmigen Beleuchten einer Probe in einem Mikroskop, insbesondere einem MINFLUX-Mikroskop, mit fokussiertem Beleuchtungslicht, wobei die Probe sequentiell an den Beleuchtungspunkten eines vordefinierten oder vordefinierbaren Beleuchtungspunktmusters beleuchtet wird. Die Erfindung betrifft außerdem ein Verfahren zum Untersuchen einer Probe, bei dem die Probe mit dem zuvor erwähnten Verfahren beleuchtet wird.

Die Erfindung betrifft außerdem eine Vorrichtung zum Ausführen des erfindungsgemäßen Verfahrens und insbesondere eine Vorrichtung zum punktförmigen Beleuchten einer Probe in einem Mikroskop, insbesondere einem MINFLUX-Mikroskop, wobei ein Beleuchtungspunktmuster vordefinierbar ist, an dessen Beleuchtungspunkten die Probe sequentiell beleuchtbar ist. Darüber hinaus betrifft die Erfindung ein Mikroskop mit einer solchen Vorrichtung.

Die MINFLUX-Mikroskopie ist beispielsweise in F. Balzarotti, Y. Eilers, K. C. Gwosch, A. H. Gynnä, V. Westphal, F. D. Stefani, J. Elf, S. W. Hell, "Nanometer resolution imaging and tracking of fluorescent molecules with minimal photon fluxes", Science 355, 606 (2017), beschrieben. In Klaus C. Gwosch, Jasmin K. Pape, in F. Balzarotti, Phillip Hoess, Jan Ellenberg, Jonas Ries, Stafan W. Hell, "MINFLUX nanoscopy delivers multicolor nanometer 3D-resolution in (living) cells", bioRxiv; doi: https://doi.org/10.1101/734251, (13. August 2019), ist beschreiben, dass mittels der MINFLUX-Nanoskopie eine Auflösung von 1-3 nm in lebenden Zellen möglich ist.

Beispielsweise ist es nach dem MINFLUX-Prinzip möglich, einen Fluoreszenzmarker mit einem Doughnut-förmigen Fokus eines Laserstrahls, der zum Anregen der Fluoreszenz benutzt wird, genau zu lokalisieren. Solange sich der Fluoreszenzmarker innerhalb des Doughnut-Ringes, aber nicht exakt in dessen Nullstelle befindet, emittiert er Fluoreszenzphotonen, die detektiert werden können. Wird nun der Doughnut-förmige Fokus an zumindest drei Beleuchtungspunkten eines Beleuchtungspunktmusters um den Fluoreszenzmarker herum platziert, kann mittels einer Art Triangulationsverfahren die Position des Fluoreszenzmarkers bestimmt werden. In einem iterativen Prozess, bei dem der Abstand der Beleuchtungspunkte zur im vorigen Schritt der Ortsbestimmung bestimmten Position des Fluoreszenzmarkers verringert wird, kann der Fokus solange relativ zu dem Fluoreszenzmarker bewegt und die detektierten Intensitäten hinsichtlich des Orts des Fluoreszenzmarkers ausgewertet werden, bis der Fluoreszenzmarker mit einer gewünschten oder mit der maximal erreichbaren Genauigkeit lokalisiert ist oder bis der Fluoreszenzmarker von einem fluoreszenten Zustand temporär oder permanent in einen nicht fluoreszenten Zustand übergangen ist, beispielsweise gebleicht ist. von wenigen Nanometern.

Es ist bekannt, in der MINFLUX-Mikroskopie elektrooptische Scanner zur schnellen Positionierung des Fokus eines Beleuchtungslichtbündels zu nutzen. Dabei treten jedoch folgende Nachteile auf: Elektrooptische Scanner arbeiten polarisationsrichtungsabhängig und wellenlängenabhängig, so dass ein Fluoreszenz-Descanning allenfalls sehr aufwändig oder gar unmöglich ist. Außerdem ist in nachteiliger Weise ein schnelles Schalten hoher elektrischer Spannungen erforderlich. Darüber hinaus besteht der Nachteil einer hohen Verlustleistung (=Wärmeentwicklung) bei nichtresonantem Betrieb. Außerdem sind die erforderlichen Komponenten sehr teuer. Ein weiterer Nachteil elektrooptischer Scanner liegt darin, dass der maximal erreichbare Ablenkwinkel gering ist.

Vergleichbare Anforderungen wie in der MINFLUX-Mikroskopie bestehen, wenn es um die Bildgewinnung mittels einer Kombination der STED-Mikroskopie mit dem aus der MINFLUX-Mikroskopie bekannten Triangulationsverfahrens oder um die Bildgewinnung mittels der sogenannten Kleinfeld-Scan-Technik der STED-Mikroskopie geht. Bei diesen Verfahren wird ein Anregungslicht zur Anregung der Fluoreszenz in Verbindung mit, allgemein ausgedrückt, einem Fluoreszenzverhinderungslicht, konkret einem Licht zur Erzeugung stimulierter Fluoreszenz, d.i. ein STED-Licht, welches die freie Fluoreszenz unterdrückt verwendet. Das Fluoreszenzverhinderungslicht wird dabei bevorzugt derart fokussiert, dass der Fokus ein zentrales Minimum aufweist, während das Anregungslicht derart fokussiert werden kann, wie es z.B. in der konfokalen Fluoreszenzmikroskopie üblich ist. Beide Verfahren dienen der Lokalisierung von Strukturen deutlich unterhalb der Beugungsgrenze, mehr noch, mit einer Auflösung, die im Vergleich zur STED-Mikroskopie größer ist. Dabei kann es sowohl um die Lokalisation einzelner Fluoreszenzmarker gehen als auch um die Erfassung von Verteilungen der Konzentration von nicht einzeln aufgelöst darzustellenden Fluoreszenzmarkern. Wegen der Ähnlichkeit der Anforderungen weisen aus dem Stand der Technik bekannte Einrichtungen auch vergleichbare Nachteile auf.

Neben den genannten Verfahren sind auch weitere Verfahren zur Abbildung von Proben, bei denen eine sequentielle Beleuchtung von Beleuchtungspunkten mit Abständen unterhalb der Beugungsgrenze erfolgt, mit einer Auflösung besser als die Beugungsgrenze bekannt, wie beispielsweise ein Verfahren der konfokalen Mikroskopie mit Verwendung eines pixelierten Detektors, welches im Artikel "Superresolution in confocal Imaging", Colin Sheppard, Optik 80, No. 2 (1988), S. 53-54, erläutert wird.

Es ist vor diesem Hintergrund die Aufgabe der vorliegenden Erfindung, ein Verfahren anzugeben, das eine schnelle sequentielle Beleuchtung von Beleuchtungspunkten eines Beleuchtungspunktmusters erlaubt und das flexibel an die jeweiligen proben- und untersuchungsspezifischen Anforderungen anpassbar ist.

Die Aufgabe wird durch ein Verfahren gemäß Patentanspruch 1 gelöst.

Das erfindungsgemäße Verfahren beinhaltet, dass die Probe sequentiell an den Beleuchtungspunkten eines vordefinierten Beleuchtungspunktmusters beleuchtet wird, wobei eine laterale Ausdehnung des Beleuchtungspunktmusters kleiner ist als die längste Wellenlänge des Beleuchtungslichtes und wobei die Beleuchtungspunkte stets ausschließlich zeitlich versetzt beleuchtet werden. Hierbei ist jedem Beleuchtungspunkt des Beleuchtungspunktmusters eine eigene von mehreren Einzellichtquellen zugeordnet und jeder Beleuchtungspunkt wird mit dem Fokus eines Beleuchtungslichtbündels der ihm zugeordneten Einzellichtquelle beleuchtet.

Es ist eine weitere Aufgabe der vorliegenden Erfindung, eine Vorrichtung, insbesondere zur Ausführung des erfindungsgemäßen Verfahrens, anzugeben, die flexibel an die jeweiligen proben- und untersuchungsspezifischen Anforderungen anpassbar ist und die es erlaubt, die Beleuchtungspunkte eines Beleuchtungspunktmusters schnell sequentiell zu beleuchten.

Diese Aufgabe wird durch eine Vorrichtung gemäß Patentanspruch 9 gelöst.

Die erfindungsgemäße Vorrichtung zum punktförmigen Beleuchten einer Probe in einem Mikroskop, insbesondere einem MINFLUX-Mikroskop, ist dazu eingerichtet, die Probe an Beleuchtungspunkten eines vordefinierten Beleuchtungspunktmusters sequentiell zu beleuchten, wobei die laterale Ausdehnung des Beleuchtungspunktmusters kleiner ist als die längste Wellenlänge des Beleuchtungslichtes, insbesondere kleiner als die Hälfte der längsten Wellenlänge des Beleuchtungslichtes. Hierbei ist jedem Beleuchtungspunkt des Beleuchtungspunktmusters eine eigene von mehreren Einzellichtquellen zugeordnet, wobei jede der Einzellichtquellen ein Beleuchtungslichtbündel emittiert, das mittels einer Abbildungsoptik auf den ihr zugeordneten Beleuchtungspunkt fokussiert ist. Außerdem ist eine Steuerungsvorrichtung der erfindungsgemäßen Vorrichtung dazu eingerichtet, das Beleuchten derart zu steuern, dass die einzelnen Beleuchtungspunkte des Beleuchtungspunktmusters stets ausschließlich zeitlich versetzt beleuchtet werden.

In erfindungsgemäßer Weise wurde erkannt, dass beispielsweise die MINFLUX-Mikroskopie und das Single-Particle-Tracking eine schnelle Positionierung des Fokus des Beleuchtungslichtes in der Probe erfordern, die mit konventionellen Scannern, insbesondere Galvanometerspiegeln, nicht ausreichend schnell realisierbar ist, so dass sich zunächst die Verwendung von resonant betriebenen Scannern oder elektrooptischen Scannern anbietet. Grundsätzlich ist eine solche schnelle Positionierung auch für weitere scannende Mikroskopieverfahren, wie solche, die weiter oben bereits erwähnt sind, anwendbar und von großem Vorteil.

Beispielsweise und insbesondere bei der MINFLUX-Mikroskopie kommt es auf eine schnelle und genaue Positionierbarkeit eines Anregungslichts an, während es bei Verfahren mit Verwendung eines Fluoreszenzverhinderungslichts, insbesondere bei Verfahren der STED-Mikroskopie insbesondere auf eine schnelle und genaue Positionierbarkeit des Fluoreszenzverhinderungslichts ankommt. Es ist erfindungsgemäß vorteilhaft beispielsweise möglich, ein Anregungslicht durchgehend auf ein Zentrum eines Beleuchtungspunktmusters zu richten und lediglich mit dem STED-Licht das Beleuchtungspunktmuster sequentiell zu beleuchten. Das Licht bzw. das fokussierte Lichtbündel, auf dessen schnelle und genaue Positionierbarkeit es ankommt, wird in der Folge als Beleuchtungslicht bzw. als Beleuchtungslichtbündel bezeichnet. Wenn in der Folge davon gesprochen wird, dass zwei Punkte nicht gleichzeitig beleuchtet werden, so bezieht sich diese Aussage immer auf das Beleuchtungslicht, welches das Licht ist, auf dessen schnelle Positionierbarkeit es ankommt. Damit ist jedoch ausdrücklich nicht ausgeschlossen, dass mehrere Beleuchtungspunkte gleichzeitig mit einem Licht auf, auf dessen schnelle Positionierbarkeit es nicht ankommt, beleuchtet werden. In bestimmten Verfahren ist es erforderlich, sequentiell mit sowohl Anregungslicht als Fluoreszenzverhinderungslicht zu beleuchten. Weiteres Licht bzw. weitere Lichtbündel, auf dessen bzw. deren schnelle Positionierbarkeit es nicht ankommt, werden hier, im Unterschied zum Beleuchtungslicht zumeist einfach als "Licht" bzw. "Lichtbündel" bezeichnet.

Es kann, beispielsweise im Hinblick auf die MINFLUX-Mikroskopie, vorteilhaft vorgesehen sein, dass der Abstand eines Beleuchtungspunkts zu jedem seiner unmittelbar benachbarten Beleuchtungspunkte kleiner ist als λ/NA, wobei λ die längste Wellenlänge des Beleuchtungslichtbündels und NA die numerische Apertur der den Fokus erzeugenden Abbildungsoptik ist. Bei der MINFLUX-Mikroskopie ist hierdurch vorteilhaft sichergestellt, dass ein sich zwischen zwei Beleuchtungspunkten befindender Fluoreszenzmarker sowohl bei der Beleuchtung des einen Beleuchtungspunktes, als auch bei der zeitlich versetzten Beleuchtung des anderen Beleuchtungspunktes jeweils in einem Fokalbereich eines Beleuchtungslichtbündels liegt. Solange sich der Fluoreszenzmarker nicht in einem Minimum des Fokus eines Beleuchtungslichtbündels befindet, wird er hierbei auch jeweils mit Beleuchtungslicht beaufschlagt und zur Fluoreszenz angeregt. Wenn die Fokusse, wie beispielsweise in der MINFLUX-Mikroskopie üblich, eine Intensitätsverteilung aufweisen, die ein zentrales Minimum aufweist, kann es auch vorkommen, dass sich ein Fluoreszenzmarker in dem zentralen Minimum des Fokus eines der Beleuchtungslichtbündel befindet und infolgedessen bei der Beaufschlagung der Probe mit diesem Beleuchtungslichtbündel kein Fluoreszenzlicht abgibt, was jedoch gerade bestätigt, dass sich der Fluoreszenzmarker im oder zumindest sehr nahe am Intensitätsminimum der Intensitätsverteilung für den betreffenden Beleuchtungspunkt befindet. Zumindest kann vorteilhaft vorgesehen sein, dass der Abstand eines Beleuchtungspunkts zu jedem seiner unmittelbar benachbarten Beleuchtungspunkte in einer Richtung senkrecht zur Ausbreitungsrichtung des ihn beleuchtenden Beleuchtungslichtbündels (Lateralabstand) kleiner ist als λ/NA oder kleiner als λ/(2NA). Bei dreidimensionalen Beleuchtungspunktmustern kann insoweit zumindest vorteilhaft vorgesehen sein, dass die Abstände unmittelbar benachbarter Projektionen der Beleuchtungspunkte auf eine zur optischen Achse und/oder zur Ausbreitungsrichtung des Beleuchtungslichts senkrechte Ebene kleiner sind als λ/NA oder λ/(2NA). In axialer Richtung werden die Abstände, wenn das Verfahren iterativ durchgeführt wird, zumindest bei den ersten Schritten der Iteration etwas größer gewählt werden, da die Intensitäten um die Nullstellen erzeugbarer Intensitätsverteilungen mit axial begrenzter Nullstelle in axialer Richtung typischerweise flacher ansteigen als die Intensitäten um die Nullstellen erzeugbarer Intensitätsverteilungen mit lateral begrenzter Nullstelle in lateraler Richtung.

Unter einem unmittelbar benachbarten Beleuchtungspunkt ist jeweils derjenige Beleuchtungspunkt zu verstehen, der dem Ausgangs-Beleuchtungspunkt in einer Richtung am nächsten ist.

Allgemein, d.h. nicht nur für die MINFLUX-Mikroskopie gilt, dass dadurch, dass Beleuchtungspunkte eines Beleuchtungspunktmusters stets ausschließlich zeitlich versetzt beleuchtet werden, gewährleistet ist, dass ein sich nahe an zwei Beleuchtungspunkten befindender Fluoreszenzmarker nicht gleichzeitig mit dem Beleuchtungslicht zweier Einzellichtquellen beaufschlagt wird.

Die laterale Ausdehnung des Beleuchtungspunktmusters, d.h. die Ausdehnung einer Projektion des Beleuchtungspunktmusters in eine zur optischen Achse der Menge der Beleuchtungslichtbündel in der Probe senkrechten Ebene, ist kleiner als die längste Wellenlänge des Beleuchtungslichts, vorzugsweise sogar kleiner als die Hälfte der Wellenlänge des Beleuchtungslichts.

Das Beleuchtungslicht kann eine einzige Wellenlänge aufweisen. In diesem Fall ist diese (einzige) Wellenlänge auch die längste Wellenlänge. Es ist alternativ auch möglich, dass ein Beleuchtungslichtbündel Beleuchtungslicht mehrerer Wellenlängen beinhaltet. Beispielsweise ist es möglich, mit Beleuchtungslicht, das mehrere Wellenlängen beinhaltet, Mehrfarben-STED-Untersuchungen durchzuführen.

Insbesondere kann, wie oben in anderer Formulierung sinngemäß schon erwähnt, vorteilhaft vorgesehen sein, dass die Probe wiederholt sequentiell an den Beleuchtungspunkten des vordefinierten oder vordefinierbaren Beleuchtungspunktmusters beleuchtet wird, um noch genauere Lokalisationsergebnisse zu erzielen oder um noch genauere Information über die Verteilung der Konzentration von nicht einzeln aufgelöst darzustellender Fluoreszenzmarker zu erhalten. Hierbei kann vorteilhaft insbesondere vorgesehen sein, dass nach einem ersten Lokalisierungsdurchgang, bei dem Beleuchtungspunkte des Beleuchtungspunktmusters zeitlich versetzt jeweils mit dem Fokus des Beleuchtungslichts des Beleuchtungslichtbündels der ihm zugeordneten Einzellichtquelle beleuchtet wurden, in einem Iterationsprozess weitere Lokalisierungsdurchgänge jeweils mit einem Beleuchtungspunktmuster durchgeführt werden, das geringere Abstände der Beleuchtungspunkte aufweist, als das jeweils unmittelbar zuvor verwendete Beleuchtungspunktmuster, wobei jeweils (beispielsweise durch eine, insbesondere automatische, Relativverschiebung von Probe und Beleuchtungslicht) darauf geachtet wird, dass sich der Fluoreszenzmarker stets innerhalb des gerade verwendeten Beleuchtungspunktmusters befindet. Bei der MINFLUX-Mikroskopie ist es, um die Lokalisierungsgenauigkeit zu steigern, dabei vorteilhaft, die Stärke der Beleuchtung zu erhöhen, wenn die Abstände der Beleuchtungspunkte des Beleuchtungspunktmusters reduziert werden. Entsprechendes kann bei Verwendung einer Kombination eines Anregungslichts und eines Fluoreszenzverhinderungslichts insbesondere für die Stärke des Fluoreszenzverhinderungslichts, welches hier das Beleuchtungslicht ist, auf dessen schnelle Positionierbarkeit es ankommt, gelten, wobei hier, je nach Verfahren und/oder je nach der untersuchten Probe eine Lokalisierungsgenauigkeit noch mehr gesteigert wird oder noch genauere Information über die Verteilung der Konzentration von nicht einzeln aufgelöst darzustellenden Fluoreszenzmarkern erhalten wird. Auf diese Weise erhöht sich die Genauigkeit der Lokalisation oder allgemein die Qualität der Information über die Probe von Durchgang zu Durchgang.

In erfindungsgemäßer Weise wurde weiter erkannt, dass es für viele Probenuntersuchen von Vorteil ist, dreidimensionale Beleuchtungspunktmuster zu verwenden, wobei allerdings eine schnelle Positionierung des Fokus des Beleuchtungslichtes in drei Raumrichtungen auch mit resonant betriebenen Scannern oder elektrooptischen Scannern nicht oder nur mit sehr großem Aufwand realisierbar ist. Gemäß einer möglichen Ausführung der vorliegenden Erfindung kann das Beleuchten der Beleuchtungspunkte eines dreidimensionalen Beleuchtungspunktmusters beispielsweise durch die Verwendung eines Lichtleitfaserbündels realisiert werden, bei dem einige der als Einzellichtquellen fungierenden Auskoppelenden der Lichtleitfasern axial voneinander beabstandet sind, was weiter unten im Detail erläutert ist.

Die vorliegende Erfindung hat den ganz besonderen Vorteil, dass kein aufwändiger, schneller Scanner, insbesondere kein resonant betriebener Scanner oder elektrooptischer Scanner, erforderlich ist.

Die Erfindung hat darüber hinaus den Vorteil, dass die Beleuchtungspunkte ohne Ortsschwankungen mit dem Fokus des Beleuchtungslichts des ihm zugeordneten Beleuchtungslichtbündels der Einzellichtquelle beleuchtet werden. Hierbei wird vorteilhaft ausgenutzt, dass keine mechanische oder elektrooptische Strahlablenkeinrichtung erforderlich ist, die ein Beleuchtungslichtbündel von Beleuchtungspunkt zu Beleuchtungspunkt lenkt. Derartige Strahlablenkeinrichtungen haben per se nämlich den Nachteil, dass die Reproduzierbarkeit der jeweils vorzunehmenden einzelnen Einstellungen begrenzt ist.

Darüber hinaus ermöglicht es die vorliegende Erfindung vorteilhaft, weitgehend beliebige, insbesondere auch dreidimensionale, Beleuchtungspunktmuster zu verwenden. Die vorliegende Erfindung hat außerdem den ganz besonderen Vorteil, dass unterschiedliche Intensitätsverteilungen (z.B. Ringfokus oder Flaschenfokus) für unterschiedliche Beleuchtungspunkte des Beleuchtungspunktmusters möglich sind.

Erfindungsgemäß kann vorteilhaft vorgesehen sein, dass ein wiederholtes Abtasten einer kleinen Zahl (z.B. < 10) von Beleuchtungspunkten in der Probe erfolgt, wobei der Ort der Beleuchtungspunkte konstant bleibt oder im Laufe der Wiederholungen angepasst werden kann.

Bei einer vorteilhaften Ausführung ist das Beleuchtungspunktmuster derart gewählt, dass wenigstens drei der Beleuchtungspunkte des Beleuchtungspunktmusters auf einer Gerade liegen oder dass alle Beleuchtungspunkte des Beleuchtungspunktmusters auf einer Gerade liegen. Ein solches Beleuchtungspunktmuster ist insbesondere vorteilhaft, wenn es darum geht, aus den Ortsdaten mehrerer Fluoreszenzmarkermoleküle wenigstens einen Abstand von Fluoreszenzmarkermolekülen und/oder von interessierenden Strukturen der Probe zu ermitteln.

Bei einer vorteilhaften Ausführung ist das Beleuchtungspunktmuster derart gewählt, dass die Beleuchtungspunkte des Beleuchtungspunktmusters in einer gemeinsamen Ebene liegen. Die Ebene ist vorzugsweise senkrecht zur optischen Achse angeordnet. Es ist jedoch auch möglich, dass die Ebene einen von 90 Grad verschiedenen Winkel zur optischen Achse aufweist. Bei dem zweidimensionalen Beleuchtungspunktmuster kann es sich insbesondere um ein kartesisches oder ein hexagonales Beleuchtungspunktmuster handeln. Es ist insbesondere auch möglich, dass Beleuchtungspunkte an den Ecken und optional im Zentrum eines Dreiecks oder eine Vierecks liegen.

Bei einer ganz besonders vorteilhaften Ausführung liegen die Beleuchtungspunkte des Beleuchtungspunktmusters nicht alle in einer gemeinsamen Ebene. Mittels eines dreidimensionalen Beleuchtungspunktmusters lassen sich insbesondere auch komplizierte Strukturen innerhalb einer Probe untersuchen. Ein vorteilhaftes dreidimensionales Beleuchtungspunktmuster kann beispielsweise als ein kubisches Beleuchtungspunktmuster oder ein kubisch raumzentriertes Beleuchtungspunktmuster oder ein kubisch flächenzentriertes Beleuchtungspunktmuster ausgebildet sein. Insbesondere kann alternativ oder zusätzlich vorteilhaft vorgesehen sein, dass die Beleuchtungspunkte des Beleuchtungspunktmusters an den Ecken einer geometrischen Struktur, beispielsweise eines Tetraeders, eines Würfels oder eines Oktaeders, angeordnet sind. Insbesondere kann innerhalb der geometrischen Struktur wenigstens ein Beleuchtungspunkt des Beleuchtungspunktmusters angeordnet sein. Insbesondere kann ein Beleuchtungspunkt im Zentrum der geometrischen Struktur angeordnet sein. Das Beleuchtungspunktmuster kann seine Beleuchtungspunkte insbesondere an den Ecken eines platonischen Körpers aufweisen. Das Beleuchtungspunktmuster kann insbesondere eine regelmäßige geometrische Struktur aufweisen. Es ist jedoch auch möglich, dass das Beleuchtungspunktmuster keine regelmäßige Struktur aufweist und insbesondere keine Beleuchtungspunkte an den Ecken eines platonischen Körpers aufweist. Insbesondere unregelmäßige Beleuchtungspunktmuster sind für eine besonders schnelle Lokalisation eines Fluoreszenzmarkers gut geeignet. Insbesondere kann im Zentrum zusätzlich ein Beleuchtungspunkt vorhanden sein.

Besonders vorteilhaft ist ein Beleuchtungspunktmuster, bei dem die Beleuchtungspunkte alle denselben Abstand zu einem Zentrum aufweisen. Wenn bei einem solchen Beleuchtungspunktmuster als Reaktion auf das Beleuchten jedes der Beleuchtungspunkte jeweils dieselbe Fluoreszenzlichtleistung gemessen wird, kann bei Vorliegen symmetrischer Intensitätsverteilungen in untereinander identischen Fokusse daraus geschlossen werden, dass sich der Fluoreszenzmarker genau im Zentrum des Beleuchtungspunktmusters befindet. Zur Kontrolle kann das Beleuchtungspunktmuster zusätzlich einen Beleuchtungspunkt im Zentrum aufweisen. Bei der Verwendung eines Fokus eines Anregungslichts mit einem zentralen Intensitätsminimum wird bei Beaufschlagung des zentralen Beleuchtungspunkts dann kein Fluoreszenzlicht emittiert, weil sich der Fluoreszenzmarker genau im Intensitätsminimum befindet.

Ganz allgemein kann vorteilhaft vorgesehen sein, dass die Beleuchtungspunkte zusätzlich mit weiterem Licht beleuchtet werden. Insbesondere kann vorteilhaft vorgesehen sein, dass die Beleuchtungspunkte zusätzlich jeweils mit dem Fokus eines weiteren Lichtbündels beleuchtet werden. Das weitere Licht des weiteren Lichtbündels kann beispielsweise eine andere Wellenlänge aufweisen als das Beleuchtungslicht. Alternativ oder zusätzlich ist es auch möglich, dass der Fokus des weiteren Lichtbündels eine andere Form aufweist als der Fokus des Beleuchtungslichtbündels.

Insbesondere wenn es darum geht, eine Probe besonders hochauflösend zu untersuchen, kann das Beleuchtungslicht Fluoreszenzverhinderungslicht sein und das weitere Licht Anregungslicht. Hierbei kann vorteilhaft vorgesehen sein, dass jeder Beleuchtungspunkt mit dem Fokus eines Lichtbündels und dem Fokus eines Fluoreszenzverhinderungslichtbündels als Beleuchtungslichtbündel beaufschlagt wird. Insbesondere bei einer solchen Ausführung ist es von Vorteil, wenn der Fokus des weiteren Lichtbündels eine zu dem Fokus des Beleuchtungslichtbündels komplementäre Intensitätsverteilung aufweist und/oder wenn der Fokus des weiteren Lichtbündels dort ein Intensitätsmaximum aufweist, wo der Fokus des Beleuchtungslichtbündels ein Intensitätsminimum aufweist. Im Falle einer solchen Überlagerung können beide Lichtbündel gemeinsam ein Beleuchtungslichtbündel ausbilden.

Zum Formen des Fokus kann im jeweiligen Strahlengang des Beleuchtungslichtbündels und/oder des weiteren Lichtbündels eine phasenmodulierende Einrichtung, in der Folge kurz als Phasenmodulator bezeichnet, angeordnet sein. Bei einer vorteilhaften Ausführung ist der Phasenmodulator im gemeinsamen Strahlengang der Beleuchtungslichtbündel und/oder der weiteren Lichtbündel angeordnet. Insbesondere kann der Phasenmodulator vorteilhaft derart ausgebildet sein, dass die Intensitätsverteilung in den Fokussen der weiteren Lichtbündel durch den Phasenmodulator nicht beeinflusst wird, während der Phasenmodulator die Intensitätsverteilung in den Fokussen der Beleuchtungslichtbündel derart beeinflusst, dass diese zu der Intensitätsverteilung in den Fokussen der Beleuchtungslichtbündel komplementär ist, insbesondere, dass sie im Zentrum ein lokales Minimum aufweist, während die Intensitätsverteilung in den Fokussen der weiteren Lichtbündel im Zentrum ein Maximum aufweist.

Bei einer ganz besonders vorteilhaften Ausführung wird jeder Beleuchtungspunkt mit Anregungslicht und Fluoreszenzverhinderungslicht beaufschlagt. Insbesondere kann vorteilhaft vorgesehen sein, dass jeder Beleuchtungspunkt mit einem Fokus eines Beleuchtungslichtbündels, das Fluoreszenzanregungslicht und Fluoreszenzverhinderungslicht beinhaltet, beleuchtet wird, wobei der Fokus zwei Anteile enthält, nämlich den des Fluoreszenzverhinderungslichts und des Anregungslichts aufweist, wobei der Fokus des Fluoreszenzverhinderungslichts ein Intensitätsmaximum aufweist, das ein Intensitätsmaximum des Anregungslichtbündels räumlich umgibt. In der Peripherie des Fokus des Beleuchtungslichtbündels, das Fluoreszenzanregungslicht beinhaltet, befindliche Fluoreszenzmarkermoleküle werden so an der Emission von Fluoreszenzlicht gehindert, so dass die Probe mit einer effektiven PSF beaufschlagt wird, die gegenüber der konfokalen PSF stark reduzierte Abmessungen aufweist. Durch das Abtasten der Probe mit dieser kleineren PSF wird bei gleicher Anzahl spontan emittierter Photonen beispielsweise eine Lokalisierungsgenauigkeit signifikant erhöht.

Im Hinblick auf eine Möglichkeit zur Ausgestaltung der erfindungsgemäßen Vorrichtung kann vorteilhaft vorgesehen sein, dass die Beleuchtungsintensität der Beleuchtungslichtbündel und/oder die Intensitätsverteilung im Fokus der Beleuchtungslichtbündel und/oder der weiteren Lichtbündel einzeln oder gemeinsam einstellbar sind. Ebenso kann vorgesehen sein, dass Intensitäten der gemeinsam ein Beleuchtungslicht ausbildenden Anregungs- und Fluoreszenzverhinderungslichtbündel einzeln oder gemeinsam einstellbar sind. Insbesondere zu diesem Zweck kann im Strahlengang jedes Anregungslichtbündels und/oder weiteren Fluoreszenzverhinderungslichtbündels ein eigener Lichtintensitätsmodulator angeordnet sein. Die Lichtintensitätsmodulatoren können jeweils beispielsweise als Flüssigkristall-SLM oder als Mikrospiegelarray ausgebildet oder als akustooptische Lichtintensitätsmodulatoren oder als elektrooptische Lichtintensitätsmodulatoren oder als Flüssigkristallmodulatoren ausgebildet sein.

Ganz allgemein kann vorteilhaft vorgesehen sein, dass die Beleuchtungspunkte jeweils gleichzeitig oder zeitlich versetzt, was auch zeitlich überlappend einschließt, mit den Anteilen eines gemeinsam ein Beleuchtungslicht ausbildenden Lichts beleuchtet werden.

Bei einer möglichen Ausführung werden alle Anteile des Beleuchtungslichts von den Einzellichtquellen emittiert. Hier kann insbesondere vorgesehen sein, dass eine oder mehrere Primärlichtquellen als Mehrfarblaser ausgebildet sind.

Bei einer besonderen Ausführung werden die Beleuchtungslichtbündel und/oder die weiteren Lichtbündel über Lichtwege, die unterschiedlich lange optische Weglängen aufweisen, zu den zugeordneten Beleuchtungspunkten geleitet; ebenso können auch die Lichtanteile, die gemeinsam ein Beleuchtungslicht ausbilden, über Lichtwege, die unterschiedlich lange optische Weglängen aufweisen, zu den zugeordneten Beleuchtungspunkten geleitet werden. Werden die Beleuchtungslichtbündel über Lichtwege, die unterschiedlich lange optische Weglängen aufweisen, zu den zugeordneten Beleuchtungspunkten geleitet, so wird das sequentielle Beleuchten der Beleuchtungspunkte dadurch erreicht, dass die Lichtpulse unterschiedlicher Einzellichtquellen unterschiedlich lange Zeiträume bis zum Eintreffen an dem jeweilig zugeordneten Beleuchtungspunkt benötigen. Die optischen Weglängen können dabei auch gemeinsam oder individuell einstellbar sein, beispielsweise mit einstellbaren optischen Verzögerungsstrecken.

Es ist insbesondere auch möglich, dass die Einzellichtquellen durch ein räumliches Aufspalten des Lichtes einer Primärlichtquelle in die Beleuchtungslichtbündel gebildet werden, wobei das räumliche Aufspalten durch das Einkoppeln unterschiedlicher Lichtanteile des Lichtes der Primärlichtquelle in die Lichtleitfasern eines Lichtleitfaserbündels realisiert sein kann. Hierzu kann beispielsweise das Eintrittsende des Lichtleitfaserbündels großflächig mit dem Licht der Primärlichtquelle beleuchtet werden, so dass letztlich die Auskoppelenden der Lichtleitfasern als die Einzellichtquellen fungieren. Alternativ kann im Hinblick auf eine besonders gute Einkoppeleffizienz, insbesondere bei Verwendung von Single-Mode Lichtleitfasern, vorgesehen sein, dass unterschiedliche Lichtanteile des Lichtes einer Primärlichtquelle, gezielt in die einzelnen Lichtleitfasern eines Lichtleitfaserbündels fokussiert werden. Beispielsweise kann hierzu vorteilhaft ein auf die räumlichen Gegebenheiten des Lichtleitfaserbündels abgestimmtes Mikrolinsenarray verwendet werden. Es ist beispielsweise auch möglich, jeden Lichtanteil mit einer separaten Optik in jeweils eine Lichtleitfaser einzukoppeln. Ebenso ist es möglich, Licht mehrerer Primärlichtquellen, insbesondere mehrerer Primärlichtquellen unterschiedlicher Wellenlängen gemeinsam in die Lichtleitfasern eines Lichtleitfaserbündels einzukoppeln, sodass ein Beleuchtungslicht mit unterschiedlichen Anteilen wie einem Anregungs- und einem Fluoreszenzverhinderungslicht ausgebildet wird.

Die Lichtleitfasern können unterschiedlich lang ausgebildet sein, so dass die einzelnen Lichtpulse der Beleuchtungslichtbündel zeitlich nacheinander aus den Auskoppelenden der unterschiedlichen Lichtleitfasern des Lichtleitfaserbündels austreten. Auf diese Weise ist eine sequentielle und wiederholte Beleuchtung der Beleuchtungspunkte eines Beleuchtungspunktmusters ermöglicht.

Die Lichtleitfasern können insbesondere als Single-Mode-Fasern und/oder als polarisationserhaltende Fasern ausgebildet sein.

Vorzugsweise ist die Vorrichtung derart ausgebildet, dass die Beleuchtungsdauer an den Beleuchtungspunkten des Beleuchtungspunktmusters einstellbar ist. Die Beleuchtungsdauer kann beispielsweise dadurch verändert werden, dass eine Ausgangpulsdauer einer Primärlichtquelle verändert wird oder dadurch, dass in den Strahlengang ein optisches Medium mit einer von Null verschiedenen Gruppengeschwindigkeitsdispersion eingefügt oder entfernt wird. Insbesondere kann vorteilhaft vorgesehen sein, dass die Beleuchtungsdauer an den Beleuchtungspunkten des Beleuchtungspunktmusters von Beleuchtungspunkt zu Beleuchtungspunkt individuell einstellbar ist.

Insbesondere kann vorteilhaft vorgesehen sein, dass die Beleuchtungsdauer an jedem der Beleuchtungspunkte des Beleuchtungspunktmusters jeweils höchstens 50 µs, insbesondere höchstens 10 µs, ganz insbesondere höchstens 5 µs beträgt.

Bei einer vorteilhaften Ausführung ist vorgesehen, dass die Beleuchtungsintensität und/oder die Intensitätsverteilung innerhalb des Fokus jeweils innerhalb einer Beleuchtungssequenz an allen Beleuchtungspunkten gleich sind. Es ist alternativ auch möglich, dass die Beleuchtungsintensität und/oder die Intensitätsverteilung innerhalb des Fokus jeweils innerhalb einer Beleuchtungssequenz an allen Beleuchtungspunkten unterschiedlich sind.

Bei einer besonders vorteilhaften Ausführung werden die Beleuchtungsintensität und/oder die Intensitätsverteilung innerhalb des Fokus an den Beleuchtungspunkten in Abhängigkeit von der Anzahl der bereits erfolgten Wiederholungen der sequentiellen Beleuchtung der Beleuchtungspunkte verändert.

Ganz allgemein kann vorteilhaft vorgesehen sein, dass das Beleuchtungslicht jeder Einzellichtquelle individuell hinsichtlich einer Lichtleistung und/oder einer Pulsdauer einer Wellenlänge und/oder einer Form des Fokus am Ort des zugeordneten Beleuchtungspunktes eingestellt wird.

Es ist möglich, dass jede der Einzellichtquellen durch jeweils eine Primärlichtquelle, insbesondere einen Laser oder einen Halbleiterlaser, gebildet ist, die eines der Beleuchtungslichtbündel emittiert. Insbesondere kann vorteilhaft vorgesehen sein, dass die Einzellichtquellen jeweils in einer vordefinierten oder vordefinierbaren Reihenfolge ein- und ausgeschaltet werden, um die Beleuchtungspunkte jeweils sequentiell zu beleuchten.

Es ist alternativ auch möglich, dass die Einzellichtquellen jeweils in einer zufälligen Reihenfolge ein- und ausgeschaltet werden, um die Beleuchtungspunkte jeweils sequentiell zu beleuchten.

Wie bereits erwähnt, ist es alternativ auch möglich, dass die Einzellichtquellen durch ein räumliches Aufspalten des Lichtes einer Primärlichtquelle in die Beleuchtungslichtbündel gebildet werden. Hierbei kann insbesondere vorteilhaft vorgesehen sein, dass die Primärlichtquelle gepulstes Licht emittiert.

Das räumliche Aufspalten kann, wie ebenfalls bereits erwähnt, beispielsweise dadurch erfolgen, dass unterschiedliche Lichtanteile des Lichtes der Primärlichtquelle in unterschiedliche Lichtleitfasern eingekoppelt werden. Hierzu kann beispielsweise das Eintrittsende des Lichtleitfaserbündels großflächig mit dem Licht der Primärlichtquelle beleuchtet werden. Alternativ können, insbesondere bei der Verwendung von Single-Mode-Lichtleitfasern, gezielt unterschiedliche Lichtanteile des Lichtes einer Primärlichtquelle, in die einzelnen Lichtleitfasern eines Lichtleitfaserbündels fokussiert werden. Beispielsweise kann hierzu vorteilhaft ein auf die räumlichen Gegebenheiten des Lichtleitfaserbündels abgestimmtes Mikrolinsenarray verwendet werden. Es ist beispielsweise auch möglich, jeden Lichtanteil mit einer separaten Optik in jeweils eine Lichtleitfaser einzukoppeln.

Die Auskoppelenden der Lichtleitfasern können zum Beleuchten der Beleuchtungspunkte mittels einer Abbildungsoptik, die insbesondere ein Mikroskopobjektiv beinhalten kann, in die Beleuchtungspunkte abgebildet werden. Wie bereits erwähnt, können die Lichtleitfasern unterschiedlich lang ausgebildet sein, um eine sequentielle Beleuchtung zu erreichen.

Bei einer ganz besonders vorteilhaften Ausführung sind die Auskoppelenden wenigstens zweier Lichtleitfasern, insbesondere aller Lichtleitfasern, in unterschiedlichen optischen Ebenen angeordnet. Diese Ausführung hat den besonderen Vorteil, dass die als Einzellichtquellen fungierenden Auskoppelenden der Lichtleitfasern von der Abbildungsoptik bezogen auf die Lichtausbreitungsrichtung (z-Richtung) in unterschiedliche Probenebenen fokussiert werden. Auf diese Weise kann ein dreidimensionales Beleuchtungspunktmuster realisiert werden.

Bei einer anderen Ausführung erfolgt das räumliche Aufspalten durch Beleuchten mehrerer Spiegel eines Mikrospiegelarrays mit dem Licht einer Primärlichtquelle. Mittels des Mikrospiegelarrays können unterschiedliche Lichtanteile in unterschiedliche Raumrichtungen reflektiert werden, um so die Beleuchtungslichtbündel der Einzellichtquellen auszubilden. Vorzugsweise wird das Mikrospiegelarray mit einer Abbildungsoptik in die Probe abgebildet. Insbesondere kann ein Digital Micromirror Device (DMD) verwendet werden. Ein Digital Micromirror Device kann derart ausgebildet sein, dass die möglichen Stellungen der einzelnen Spiegel durch Anschläge präzise definiert sind. Insbesondere in diesem Fall ermöglicht die Verwendung eines Digital Micromirror Device eine sehr präzise Strahlsteuerung.

Bei einer besonders vorteilhaften Ausführung ist eine hinsichtlich des Ablenkwinkels einstellbare Strahlablenkvorrichtung vorhanden, mittels der das gesamte Beleuchtungspunktmuster relativ zur Probe vor und/oder während des Beleuchtens positioniert werden kann. Die einstellbare Strahlablenkvorrichtung kann beispielsweise einen Galvanometerspiegel aufweisen.

Wie bereits erwähnt, kann vorteilhaft eine Abbildungsoptik vorhanden sein, die die Beleuchtungslichtbündel und/oder die weiteren Lichtbündel in die Beleuchtungspunkte abbildet. Insbesondere kann eine Abbildungsoptik vorhanden sein, die die Auskoppelenden von Lichtleitfasern in die Beleuchtungspunkte abgebildet.

Bei einer vorteilhaften Ausführung weist die Abbildungsoptik einen Phasenmodulator auf. Der Phasenmodulator kann zur Formung eines Fokus der Beleuchtungslichtbündel oder der weiteren Lichtbündel dienen.

Alternativ oder zusätzlich kann vorteilhaft vorgesehen sein, dass die Abbildungsoptik eine Einrichtung beinhaltet, mit der der Abstand der Beleuchtungspunkte eines Beleuchtungspunktmusters zueinander eingestellt werden kann. Dies ist sowohl mit Blick auf die Durchführung eines iterativen MINFLUX-Verfahrens als auch mit Blick auf z.B. das sogenannte Kleinfeld-Scan-Verfahren, bei denen die Beleuchtungspunkte einem Zentrum iterativ angenähert werden können, von Vorteil. Beispielsweise kann die Abbildungsoptik hierzu eine in ihrer Brennweite einstellbare Linse und/oder einen verformbaren Spiegel und/oder einen SLM aufweisen.

In einer vorteilhaften Ausführungsform beinhaltet die Abbildungsoptik eine Zoom-Optik, mittels der der Abbildungsmaßstab der Abbildungsoptik veränderbar ist, so dass mit der Zoom-Optik der Abstand der Beleuchtungspunkte zueinander eingestellt werden kann. Die Zoom-Optik kann vorteilhaft derart ausgebildet sein, dass die Lage der Pupillenebenen unabhängig von dem Vergrößerungsfaktor stets gleich bleibt. Eine solche Zoom-Optik ist beispielsweise in EP 1 617 251 A1 angegeben. Sie kann beispielsweise aus vier gegeneinander verschiebbaren Linsengruppen aufgebaut sein. In einer Publikation von Sourav Pal und Lakshminarayan Hazra, "Stabilization of pupils in a zoom lens with two independent movements", Appl. Opt. 52, 5611-5618 (2013) sind weitere Zoom-Optiken mit nur drei Linsen beschrieben, die zumindest für mehrere unterschiedliche Vergrößerungen untereinander identische Lagen der Eintritts- sowie der Austrittpupille aufweisen.

Ganz allgemein kann vorteilhaft vorgesehen sein, dass die Abbildungsoptik wenigstens zwei Beleuchtungslichtbündel und/oder weitere Lichtbündel in unterschiedliche optische Ebenen innerhalb der Probe fokussiert. Dies kann, wie oben bereits erwähnt, beispielsweise dadurch realisiert werde, dass die als Einzellichtquellen fungierenden Auskoppelenden von Lichtleitfasern in voneinander beabstandeten optischen Ebenen (also in z-Richtung voneinander beabstandeten Ebenen) angeordnet werden.

Nach einem besonders vorteilhaften Erfindungsgedanken werden mehrere Punkdetektoren verwendet, wobei unterschiedlichen Beleuchtungspunkten des Beleuchtungspunktmusters jeweils ein Punkdetektor zugeordnet wird, der das von dem jeweiligen Beleuchtungspunkt ausgehende Detektionslicht, insbesondere Fluoreszenzlicht, detektiert. Hierbei kann insbesondere vorteilhaft vorgesehen sein, dass jeder Punktdetektor durch eine Detektions-Lichtleitfaser und einen nachgeschalteten Einzeldetektor gebildet ist, so dass unterschiedlichen Beleuchtungspunkten des Beleuchtungspunktmusters jeweils eine eigene Detektions-Lichtleitfaser zugeordnet ist und das von dem jeweiligen Beleuchtungspunkt ausgehende Detektionslicht in die ihm zugeordnete Detektions-Lichtleitfaser eingekoppelt wird.

Von besonderem Vorteil ist ein Mikroskop, insbesondere ein MINFLUX-Mikroskop, zum Untersuchen einer Probe, das eine erfindungsgemäße Vorrichtung zum sequentiellen Beleuchten einer Probe an unterschiedlichen Beleuchtungspunkten eines Beleuchtungspunktmusters aufweist. Hierbei kann vorteilhaft vorgesehen sein, dass jedem Beleuchtungspunkt jeweils ein Punktdetektor zugeordnet ist, der das von dem jeweiligen Beleuchtungspunkt ausgehende Detektionslicht, insbesondere Fluoreszenzlicht, detektiert.

Insbesondere kann, wie oben bereits erwähnt, vorteilhaft vorgesehen sein, dass jeder Punktdetektor des Mikroskops durch eine Detektions-Lichtleitfaser und einen nachgeschalteten Einzeldetektor gebildet ist. Unterschiedlichen Beleuchtungspunkten des Beleuchtungspunktmusters ist so jeweils eine Detektions-Lichtleitfaser zugeordnet, wobei das von dem jeweiligen Beleuchtungspunkt ausgehende Detektionslicht in die ihm zugeordnete Detektions-Lichtleitfaser eingekoppelt ist und so dem zugeordneten Einzeldetektor zugeleitet wird. Die Detektions-Lichtleitfasern können vorteilhaft zu einem Detektions-Lichtleitfaserbündel zusammengefasst sein.

Ganz allgemein kann vorteilhaft vorgesehen sein, dass das Detektionslicht zeitaufgelöst detektiert wird, so das jeweilige Detektionslicht jeweils einem Beleuchtungslichtpuls zugeordnet werden kann.

Von ganz besonderem Vorteil ist ein Verfahren zum Lokalisieren von Fluoreszenzmarkermolekülen in einer Probe, bei dem die Probe gemäß dem erfindungsgemäßen Verfahren beleuchtet wird, wobei jeweils die von den beleuchteten Probenbereichen ausgehende Menge an Fluoreszenzlicht gemessen wird. Insbesondere kann vorteilhaft zusätzlich vorgesehen sein, dass jeweils der Abstand eines Fluoreszenzmarkermoleküls jeweils zu einem der Beleuchtungspunkte unter Berücksichtigung der Intensitätsverteilung des den jeweiligen Beleuchtungspunkt beleuchtenden Beleuchtungslichtbündels und der jeweils gemessenen Menge an Fluoreszenzlicht ermittelt wird. Hierbei wird ausgenutzt, dass sich ein Fluoreszenzmarker, der als Reaktion auf eine Beleuchtung mit Beleuchtungslicht eine bestimmte Menge an Fluoreszenzlicht emittiert hat, nur an einer der Stellen innerhalb der (als bekannt vorausgesetzten) Intensitätsverteilung befinden kann, an denen die Beleuchtungsintensität zu der gemessenen Menge an Fluoreszenzlicht korrespondiert.

Auch bei der Bestimmung der genauen Position des Fluoreszenzmarkermoleküls innerhalb des Beleuchtungspunktmusters wird bevorzugt eine bekannte Intensitätsverteilung in den Fokussen mit berücksichtigt.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel einer erfindungsgemäßen Vorrichtung zum punktförmigen Beleuchten einer Probe,
- Fig. 2: eine Detailansicht eines zweiten Ausführungsbeispiels einer erfindungsgemäßen Vorrichtung zum punktförmigen Beleuchten einer Probe,
- Fig. 3 und 4: Detailansichten eines dritten Ausführungsbeispiels einer erfindungsgemäßen Vorrichtung zum punktförmigen Beleuchten einer Probe,
- Fig. 5: zeigt eine Detailansicht eines vierten Ausführungsbeispiels einer erfindungsgemäßen Vorrichtung zum punktförmigen Beleuchten einer Probe,
- Fig. 6: ein Ausführungsbeispiel in Bezug auf eine mögliche Anordnung der Lichtleitfasern 13 innerhalb eines Lichtleitfaserbündels 14,
- Fig. 7: eine Detaildarstellung eines fünften Ausführungsbeispiels einer erfindungsgemäßen Vorrichtung zum punktförmigen Beleuchten einer Probe,
- Fig. 8: eine Detailansicht eines Ausführungsbeispiels erfindungsgemäßen Mikroskops, dass eine erfindungsgemäße Vorrichtung zum punktförmigen Beleuchten einer Probe beinhaltet,
- Fig. 9: eine Detailansicht eines sechsten Ausführungsbeispiels einer erfindungsgemäßen Vorrichtung zum punktförmigen Beleuchten einer Probe,
- Fig. 10: eine Detailansicht eines siebten Ausführungsbeispiels einer erfindungsgemäßen Vorrichtung zum punktförmigen Beleuchten einer Probe, und
- Fig. 11: eine Detailansicht eines achten Ausführungsbeispiels einer Vorrichtung zum punktförmigen Beleuchten einer Probe.

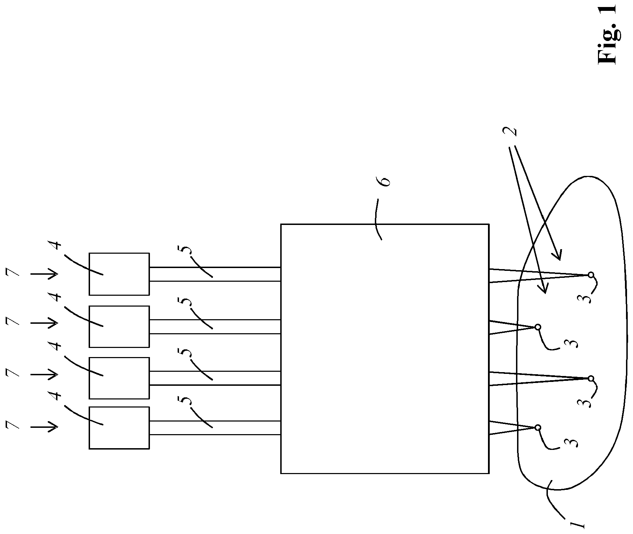

Figur 1 zeigt schematisch ein erstes Ausführungsbeispiel einer erfindungsgemäßen Vorrichtung zum punktförmigen Beleuchten einer Probe 1 in einem Mikroskop, insbesondere einem MINFLUX-Mikroskop, wobei ein Beleuchtungspunktmuster 2 definierbar ist, an dessen Beleuchtungspunkten 3 die Probe 1 wiederholt sequentiell beleuchtbar ist. Jedem Beleuchtungspunkt 3 des Beleuchtungspunktmusters 2 ist eine eigene von mehreren Einzellichtquellen 4 zugeordnet, wobei jede der Einzellichtquellen 4 ein Beleuchtungslichtbündel 5 emittiert, das auf den ihr zugeordneten Beleuchtungspunkt 3 mittels einer Abbildungsoptik 6, die insbesondere ein (in dieser Figur nicht dargestelltes) Mikroskopobjektiv 24 beinhalten kann, fokussiert ist.

Jede der Einzellichtquellen 4 ist als eine Primärlichtquelle 7, die beispielsweise als Laser ausgeführt sein kann, gebildet.

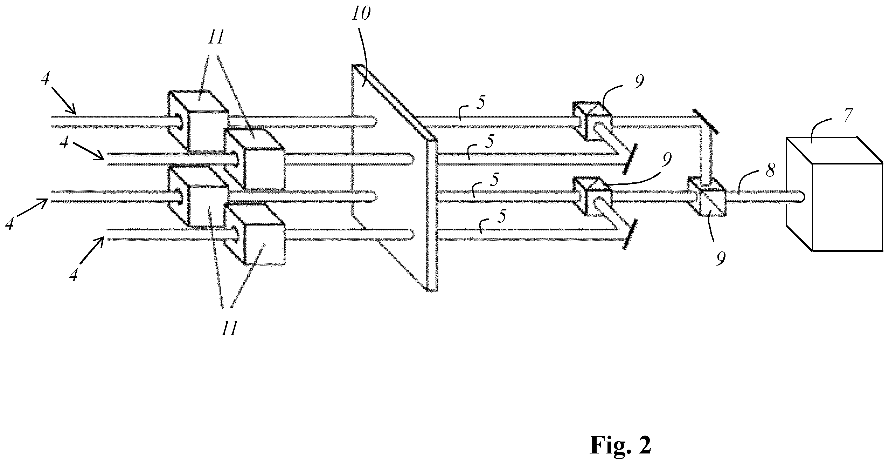

Figur 2 zeigt eine Detailansicht eines zweiten Ausführungsbeispiels einer erfindungsgemäßen Vorrichtung zum punktförmigen Beleuchten einer Probe 1. Bei dem zweiten Ausführungsbeispiel sind die Einzellichtquellen 4 durch ein räumliches Aufspalten des Lichtes 8 einer einzigen Primärlichtquelle 7 gebildet. Zum Aufspalten des Lichtes 8 der Primärlichtquelle 7 dienen kaskadiert hintereinander geschaltete Strahlteiler 9, die insbesondere als Neutral- oder Polarisationsstrahlteiler ausgeführt sein können. Es ist auch möglich, dass die Strahlteiler 9 als dichroitische Strahlteiler ausgebildet sind, um unterschiedliche Beleuchtungspunkte 3 mit Beleuchtungslicht unterschiedlicher Wellenlänge zu beaufschlagen.

Im Strahlengang jedes der Beleuchtungslichtbündel 5 ist als Bestandteil einer (ansonsten nicht weiter dargestellten) Abbildungsoptik 6, die die Beleuchtungslichtbündel 5 in die Beleuchtungspunkte 3 abbildet, ein SLM (Spatial Light Modulator) 10 angeordnet. Der SLM 10 kann beispielsweise dazu dienen, eine bestimmte Form des Fokus der Beleuchtungslichtbündel 5 am Ort der Beleuchtungspunkte 3 zu realisieren.

Im Strahlengang jedes der Beleuchtungslichtbündel 5 befindet sich außerdem ein Lichtintensitätsmodulator 11. Mittels der Lichtintensitätsmodulatoren 11 kann die Lichtleistung jedes einzelnen der Beleuchtungslichtbündel 5 eingestellt und/oder zeitlich moduliert werden. Beispielsweise ist es möglich, die Einzellichtquellen 4 mittels der Lichtintensitätsmodulatoren 11 wiederholt in einer vordefinierten oder vordefinierbaren Reihenfolge ein- und auszuschalten, um die Beleuchtungspunkte 3 sequentiell (zeitlich nacheinander) zu beleuchten. Es ist beispielsweise auch möglich, dass die Einzellichtquellen 4 durch eine entsprechende Ansteuerung der Lichtintensitätsmodulatoren 11 jeweils in einer zufälligen Reihenfolge ein- und aus geschaltet werden, um die Beleuchtungspunkte 3 nach einem Zufallsprinzip sequentiell zu beleuchten.

Alternativ ist es auch möglich, dass die einzige Primärlichtquelle 7 als gepulste Lichtquelle, beispielsweise als Pulslaser, ausgebildet ist, so dass mit Hilfe der Lichtintensitätsmodulatoren 11 die Lichtleistung der gepulsten Beleuchtungslichtbündel 5 jeder der Einzellichtquellen 4 individuell eingestellt werden kann. Bei einer solchen Ausführungsform sind die optischen Weglängen der einzelnen Beleuchtungslichtbündel 5 vorzugsweise unterschiedlich, so dass die Beleuchtungslichtpulse der einzelnen Beleuchtungslichtbündel 5 unterschiedlich lange Zeiträume bis zum Eintreffen an den zugeordneten Beleuchtungspunkten benötigen und die Beleuchtung der Beleuchtungspunkte 3 mit den Beleuchtungslichtpulsen somit sequentiell erfolgt. Vorzugsweise ist die Vorrichtung derart ausgebildet, dass die optischen Weglängen der einzelnen Beleuchtungslichtbündel 5 gemeinsam oder individuell einstellbar sind. Beispielsweise können hierfür einstellbare optische Verzögerungsstrecken vorhanden sein.

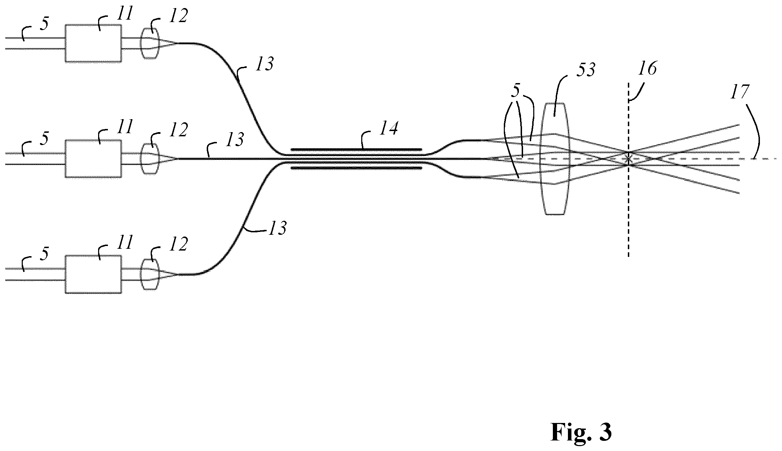

Figur 3 zeigt eine Detailansicht eines dritten Ausführungsbeispiels einer erfindungsgemäßen Vorrichtung. Bei diesem Ausführungsbeispiel werden die Beleuchtungslichtbündel 5, nachdem sie jeweils einen Lichtintensitätsmodulator 11 passiert haben, jeweils mit einer Einkoppeloptik 12 in eine Lichtleitfaser 13 eingekoppelt. Die Lichtleitfasern 13 sind zu einem Faserbündel 14 zusammengefasst. Die aus den Lichtleitfasern 13 des Lichtleitfaserbündels 14 austretenden Beleuchtungslichtbündel 5 werden mittels eines Kollimators 53 kollimiert und derart umgelenkt, dass sie sich in einer zur (nicht dargestellten) Fokusebene, in der die Beleuchtungspunkte angeordnet sind, konjugierten Ebene 16 schneiden. Es ist beispielsweise vorteilhaft möglich, in dieser konjugierten Ebene 16 einen Phasenmodulator 17 anzuordnen, um beispielsweise die Form des Fokus jedes der Beleuchtungslichtbündel 5 am Ort der Beleuchtungspunkte 3 zu beeinflussen.

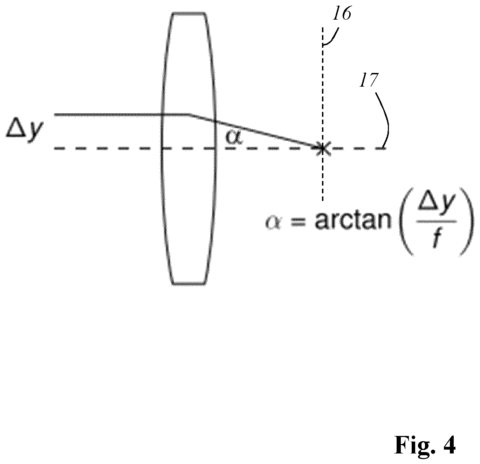

Figur 4 illustriert, wie sich ein Abstand Δy zur optischen Achse 21 in einen Einfallswinkel a bezüglich der konjugierte Ebene 16 übersetzt.

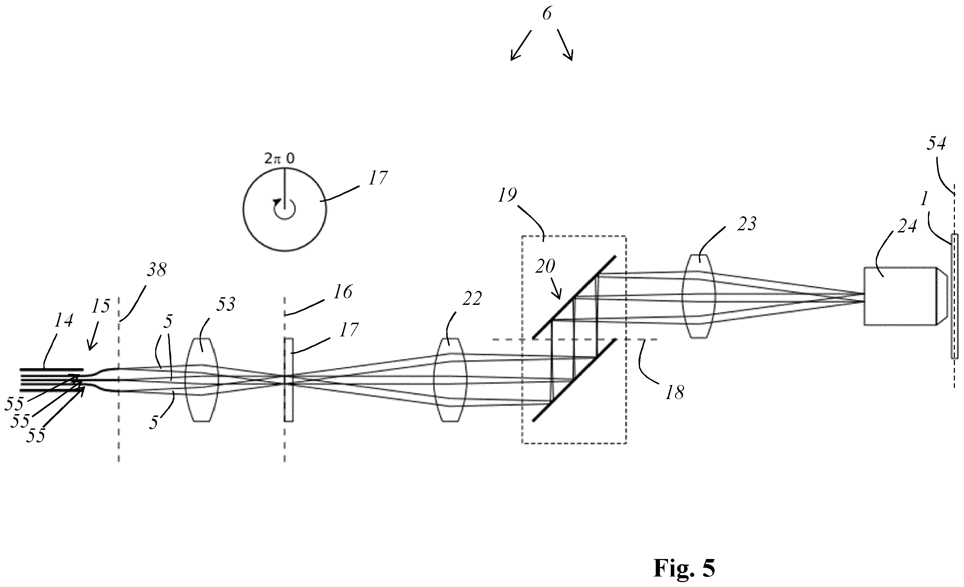

Figur 5 zeigt eine Detailansicht eines vierten Ausführungsbeispiels einer erfindungsgemäßen Vorrichtung. Bei diesem Ausführungsbeispiel werden die Auskoppelenden 55, die in einer zur Fokusebene 54 korrespondierenden Bildebene 38 angeordnet sind, mittels einer Abbildungsoptik 6 auf die (in dieser Figur nicht dargestellten) Beleuchtungspunkte 3 abgebildet. Die aus den Auskoppelenden 55 der Lichtleitfasern 13 des Lichtleitfaserbündels 14 austretenden Beleuchtungslichtbündel 5 werden mit einem Kollimator 53 kollimiert, so dass sie sich in einer zur Fokusebene 54 konjugierten Ebene 16 schneiden. In dieser konjugierten Ebene 16 ist ein Phasenmodulator 17 angeordnet, der beispielhaft als Vortex-Phasenplatte ausgebildet ist.

Dieser beispielhafte Phasenmodulator 17 ist in Figur 5 auch separat dargestellt. Der Phasenmodulator 17 zeichnet sich allgemein dadurch aus, dass er einem hindurchtretenden Lichtbündel ortsabhängig eine unterschiedliche Phasenverzögerung aufprägt. Der Phasenmodulator 17 kann derart ausgebildet sein, dass ein doughnut-förmiger Fokus der Beleuchtungslichtbündel 5 in der Probe 1 erreicht wird. Ein solcher Fokus weist auf der optischen Achse 21 ein Intensitätsminimum, insbesondere eine Intensitätsnullstelle, auf. Der Phasenmodulator 17 kann auch derart ausgebildet sein, dass ein Fokus der Beleuchtungslichtbündel 5 in der Probe 1 erreicht wird, der eine dreidimensionale Struktur aufweist, bei dem ein Intensitätsminimum sowohl lateral, beispielsweise durch eine ringförmige Intensitätsverteilung, als auch axial, beispielsweise von zwei kalottenförmigen Intensitätsverteilungen, umgrenzt ist. Ein solcher Fokus kann als 3D-Doughnut bezeichnet werden.

Die Vorrichtung weist in einer Zwischenbildebene 18 eine einstellbare Strahlablenkeinrichtung 19 auf, die ein erstes einstellbares Spiegelpaar 20 und ein zweites, hier nicht dargestelltes, einstellbares Spiegelpaar aufweist. Die Spiegelpaar 20 und das nicht gezeigte Spiegelpaar verschwenken den Strahl um zueinander senkrechte Achsen, so dass die Fokusse der Beleuchtungslichtbündel 5 innerhalb der Probe in x-Richtung und in y-Richtung positioniert werden können. Der einstellbaren Strahlablenkeinrichtung 19 ist eine Scanlinse 22 vorgeschaltet und eine Tubuslinse 23 nachgeschaltet. Die Abbildungsoptik 6 beinhaltet ein Mikroskopobjektiv 24, das die Beleuchtungslichtbündel 5 auf die Beleuchtungspunkte 3 des Beleuchtungspunktmusters 2 innerhalb der Probe 1 fokussiert.

Die aus dem Lichtleitfaserbündel 14 austretenden Beleuchtungslichtbündel 5 können durch Aufspalten des Lichtes 8 einer einzigen Primärlichtquelle 7, wie dies beispielsweise in Figur 2 dargestellt ist, erzeugt sein. Es ist auch möglich, dass die Beleuchtungslichtbündel 5 von Einzellichtquellen 4 stammen, die alle als Primärlichtquellen 7 ausgebildet sind, wie dies beispielsweise in Figur 1 dargestellt ist.

Es ist alternativ auch möglich, dass die Einzellichtquellen 4 durch ein räumliches Aufspalten des Lichtes 8 einer Primärlichtquelle 7 in die Beleuchtungslichtbündel 5 gebildet sind, wobei das räumliche Aufspalten durch das Einkoppeln unterschiedlicher Lichtanteile des Lichtes 8 der Primärlichtquelle 7 in die Lichtleitfasern 13 realisiert ist. Hierzu kann beispielsweise das Eintrittsende des Lichtleitfaserbündels 14 großflächig mit dem Licht 8 der Primärlichtquelle 7 beleuchtet werden, so dass letztlich die Auskoppelenden 55 der Lichtleitfasern 13 als die Einzellichtquellen 4 fungieren. Alternativ kann im Hinblick auf eine besonders gute Einkoppeleffizienz vorgesehen sein, dass unterschiedliche Lichtanteile des Lichtes 8 der Primärlichtquelle 7 gezielt in die einzelnen Lichtleitfasern 13 des Lichtleitfaserbündels 14 fokussiert werden. Beispielsweise kann hierzu vorteilhaft ein auf die räumlichen Gegebenheiten des Lichtleitfaserbündels 14 abgestimmtes Mikrolinsenarray verwendet werden. Es ist beispielsweise auch möglich, jeden Lichtanteil mit einer separaten Optik in jeweils eine der Lichtleitfasern 13 einzukoppeln.

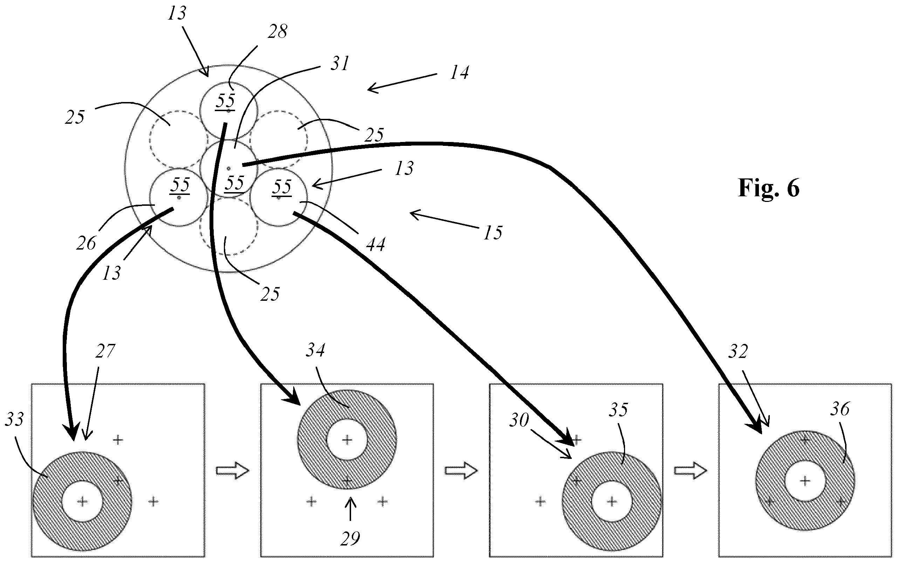

Figur 6 zeigt ein Ausführungsbeispiel in Bezug auf eine mögliche Anordnung der Lichtleitfasern 13 innerhalb eines Lichtleitfaserbündels 14. Durch die räumliche Anordnung der Auskoppelenden 55 der Lichtleitfasern 13 ist die relative räumliche Anordnung der Beleuchtungspunkte 3, die im unteren Teil der Figur durch +-Zeichen angedeutet sind, abgesehen von einer Skalierung durch den jeweiligen Abbildungsmaßstab, festgelegt. Die Auskoppelenden 55 von vier Lichtleitfasern 13, die als vier Einzellichtquellen 4 fungieren, sind relativ zueinander in einem y-förmigen Muster angeordnet, wobei das Lichtleitfaserbündel 14 auch Leerpositionen 25 beinhaltet.

Eine erste Lichtleitfaser 26 der Lichtleitfasern 13 ist einem ersten Beleuchtungspunkt 27 innerhalb der Probe zugeordnet. Eine zweite Lichtleitfaser 28 der Lichtleitfasern 13 ist einem zweiten Beleuchtungspunkt 29 innerhalb der Probe zugeordnet. Eine dritte Lichtleitfaser 44 der Lichtleitfasern 13 ist einem dritten Beleuchtungspunkt 30 innerhalb der Probe 1 zugeordnet. Eine vierte Lichtleitfaser 31 der Lichtleitfasern 13 ist einem vierten Beleuchtungspunkt 32 innerhalb der Probe zugeordnet.

Die aus den Lichtleitfasern 13 austretenden Beleuchtungslichtbündel 5 sind gepulst und derart in die Lichtleitfasern 13 eingekoppelt, dass zunächst ein Lichtpuls aus der ersten Lichtleitfaser 26 austritt, so dass der erste Beleuchtungspunkt 27 mit dem ersten Fokus 33, der als doughnut-förmiger Fokus ausgestaltet ist, beleuchtet wird. Anschließend tritt ein Lichtpuls aus der zweiten Lichtleitfaser 28 aus, so dass der zweite Beleuchtungspunkt 29 mit einem entsprechendem dounught-förmigen zweiten Fokus 34 beleuchtet wird. Danach tritt ein Lichtpuls aus der dritten Lichtleitfaser 44 aus, so dass der dritte Beleuchtungspunkt 30 mit einem entsprechenden dounught-förmigen dritten Fokus 35 beleuchtet wird. Schließlich tritt ein Lichtpuls aus der vierten Lichtleitfaser 31 aus, so dass der vierte Beleuchtungspunkt 32 mit einem dounught-förmigen vierten Fokus 36 beleuchtet wird. Anschließend wiederholt sich die Sequenz beginnend mit der Beleuchtung des ersten Beleuchtungspunkts 27 erneut.

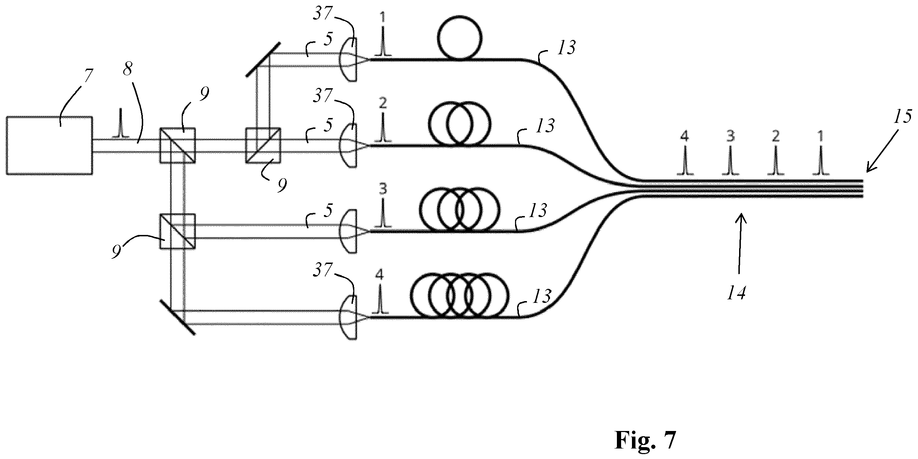

Figur 7 zeigt eine Detaildarstellung eines fünften Ausführungsbeispiels einer erfindungsgemäßen Vorrichtung. Bei diesem Ausführungsbeispiel wird das gepulste Licht 8 einer Primärlichtquelle 7, die beispielsweise als gepulster Laser ausgebildet sein kann, mittels mehrerer Strahlteiler 9 räumlich in einzelne Beleuchtungslichtbündel 5 aufgespalten. Die Beleuchtungslichtbündel 5 werden jeweils mit einer Einkoppeloptik 37 in eine Lichtleitfaser 13 eingekoppelt Die Lichtleitfasern 13 sind unterschiedlich lang ausgebildet, so dass die einzelnen Lichtpulse der Beleuchtungslichtbündel 5 zeitlich nacheinander aus dem Austrittsende 15 des Lichtleitfaserbündels 14 zu dem die Lichtleitfasern 13 zusammengefasst sind, austreten. Auf diese Weise ist eine sequentielle und wiederholte Beleuchtung der Beleuchtungspunkte 3 eines Beleuchtungspunktmusters 2 innerhalb einer Probe 1 jeweils mit dem Beleuchtungslicht einer Einzellichtquelle 4 ermöglicht.

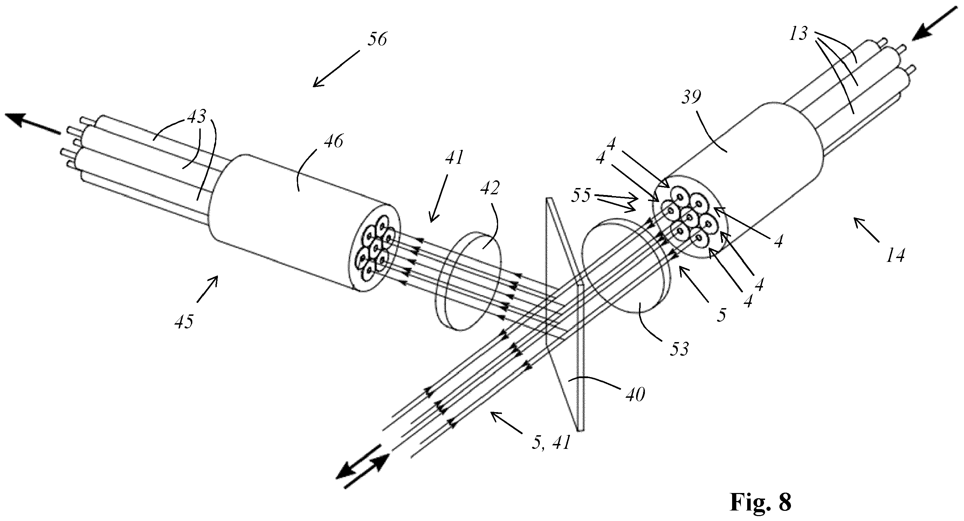

Figur 8 zeigt eine Detailansicht eines Ausführungsbeispiels eines erfindungsgemäßen Mikroskops, das eine erfindungsgemäße Vorrichtung beinhaltet. Bei diesem Ausführungsbeispiel fungieren die Auskoppelenden 55 der Lichtleitfasern 13 eines Lichtleitfaserbündels 14 als Einzellichtquellen 4. Die Lichtleitfasern 13 des Lichtleitfaserbündels 14 sind in einer Hülse 39 gehaltert. Die aus den Auskoppelenden 55 der Lichtleitfasern 13 austretenden Beleuchtungslichtbündel 5 werden mit einem Kollimator 53 kollimiert und passieren anschließend einen Hauptstrahlteiler 40, der als dichroitischer Strahlteiler ausgebildet ist. Anschließend werden die Beleuchtungslichtbündel 5 auf die Beleuchtungspunkte 3 des Beleuchtungspunktmusters 2 abgebildet, was in Figur 8 nicht dargestellt ist. Die einzelnen kollimierten Beleuchtungslichtbündel 5 verlaufen zueinander nicht exakt parallel, sondern unter einem flachen Winkel, so dass sie sich ein einer sich in einer zur in dieser Figur nicht gezeigten Fokusebene 54 konjugierten Ebene 16 (in dieser Figur ebenfalls nicht gezeigt) schneiden.

Bei diesem Ausführungsbeispiel ist den unterschiedlichen Beleuchtungspunkten 3 des Beleuchtungspunktmusters 2 jeweils ein Punktdetektor zugeordnet, der das von dem jeweiligen Beleuchtungspunkt 2 ausgehende Detektionslicht, nämlich Fluoreszenzlicht, detektiert. Die von den Beleuchtungspunkten 3 des Beleuchtungspunktmusters 2 ausgehenden Detektionslichtbündel 41, die wie die Beleuchtungslichtbündel 5 nicht exakt parallel laufen, werden mittels einer Linse 42 jeweils auf das Einkoppelende einer Detektions-Lichtleitfaser 43 fokussiert und so jeweils in die Detektions-Lichtleitfaser 43 eingekoppelt. Auf diese Weise ist jedem der unterschiedlichen Beleuchtungspunkte 3 des Beleuchtungspunktmusters 2 jeweils eine eigene Detektions-Lichtleitfaser 43 zugeordnet, in die das von dem jeweiligen Beleuchtungspunkt 3 ausgehende Detektionslichtbündel 41 eingekoppelt wird. Die Detektions-Lichtleitfasern 43 sind Bestandteil eines Detektionslichtleitfaserbündels 56. Mittels der Detektions-Lichtleitfaser 43 wird jedes der Detektionslichtbündel 41 zu einem eigenen (nicht dargestellten) Detektor geleitet. Der jeweilige Detektor fungiert in Kombination mit der zugehörigen Detektions-Lichtleitfaser 43 als Punktdetektor. Jede Detektions-Lichtleitfaser 43 fungiert insoweit sowohl zum Transport des Detektionslichts als auch als konfokale Blende. Die Detektions-Lichtleitfaser 43 sind zu einem Detektions-Lichtleitfaserbündel 45, das eine Hülse 46 aufweist, zusammengefasst.

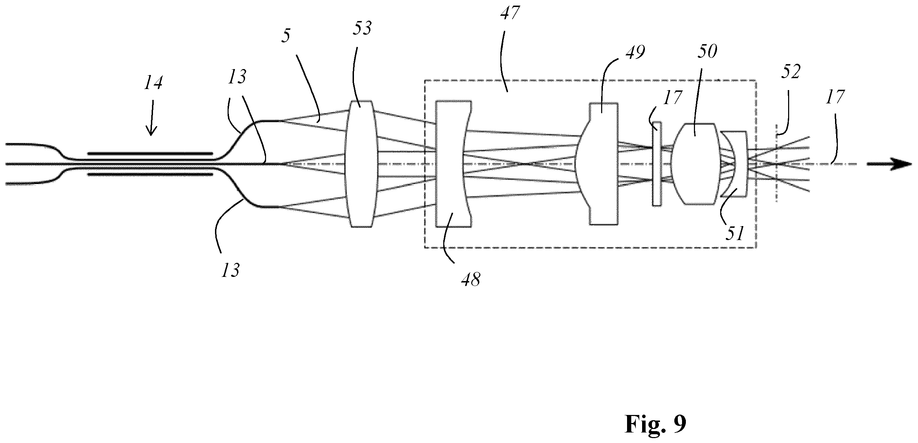

Figur 9 zeigt eine Detailansicht eines sechsten Ausführungsbeispiels einer erfindungsgemäßen Vorrichtung. Bei diesem Ausführungsbeispiel werden die Beleuchtungslichtbündel 5 der Einzellichtquellen 4 in die Lichtleitfasern 13 eines Lichtleitfaserbündels 14 eingekoppelt. Die aus den Lichtleitfasern 13 austretenden Beleuchtungslichtbündel 5 werden mittels eines Kollimators 53 kollimiert und gelangen anschließend zu einer Zoomoptik 47, die es erlaubt, den Abbildungsmaßstab und damit den Abstand der beleuchteten Beleuchtungspunkte 3 relativ zueinander anzupassen. Die Zoomoptik 47 beinhaltet eine erste Linse 48, der eine einstellbare Linse 49 nachgeschaltet ist. Die Zoomoptik 47 beinhaltet außerdem eine zweite Linse 50 und eine dritte Linse 51. Zwischen der einstellbaren Linse 49 und der zweiten Linse 50 ist ein Phasenmodulator 17 zum Formen der Fokusse der Beleuchtungslichtbündel 5 angeordnet. Die Zoomoptik 47 ist unmittelbar vor einer Zwischenbildebene 52 positioniert. Die aus der Zoomoptik 47 austretenden Beleuchtungslichtbündel 5 werden mit einem (nicht dargestellten) Mikroskopobjektiv 24 auf die Beleuchtungspunkte 3 des Beleuchtungspunktmusters 2 fokussiert.

Bei der Lokalisierung eines Fluoreszenzmarkers kann hierbei beispielsweise derart vorgegangen werden, dass zunächst ein Beleuchtungspunktmuster 2 verwendet wird, bei dem die Abstände benachbarter Beleuchtungspunkte 3 vergleichsweise groß sind. Das Beleuchtungspunktmuster 2 wird vorzugsweise derart groß gewählt, dass ein zu lokalisierender Fluoreszenzmarker sich mit Gewissheit innerhalb des Beleuchtungspunktmusters 2 befindet. Hierbei hängt die zu wählende Größe des Beleuchtungspunktmusters 2 mit der Güte der Vorkenntnis über die Position des zu lokalisierenden Fluoreszenzmarkers ab. Nach einem ersten Lokalisierungsdurchgang, bei dem Beleuchtungspunkte 3 des Beleuchtungspunktmusters 2 zeitlich versetzt jeweils mit dem Fokus des Beleuchtungslichts des Beleuchtungslichtbündels 5 der ihm zugeordneten Einzellichtquelle 4 beleuchtet wurden, können sich in einem Iterationsprozess weitere Lokalisierungsdurchgänge jeweils mit einem Beleuchtungsmuster 2 anschließen, das geringere Abstände der Beleuchtungspunkte 3 aufweist, als das jeweils unmittelbar zuvor verwende Beleuchtungsmuster 2, wobei jeweils (beispielsweise durch eine Relativverschiebung von Probe und Beleuchtungsoptik) darauf geachtet wird, dass sich der Fluoreszenzmarker innerhalb des Beleuchtungsmusters 2 befindet. Auf diese Weise erhöht sich die Genauigkeit der Lokalisation von Lokalisierungsdurchgang zu Lokalisierungsdurchgang.

Eine Verringerung der Abstände der Beleuchtungspunkte 3 kann (im Hinblick auf dreidimensionale Beleuchtungsmuster 2 sowohl lateral als auch axial) mit der Zoomoptik 47 erreicht werden. Die Zoomoptik 47 kann vorteilhaft derart ausgebildet sein, dass die Verringerung der axialen Abstände der Beleuchtungspunkte 3 bei einem dreidimensionalen Beleuchtungsmuster 2 annähernd quadratisch mit der Verringerung der lateralen Abstände einhergeht.

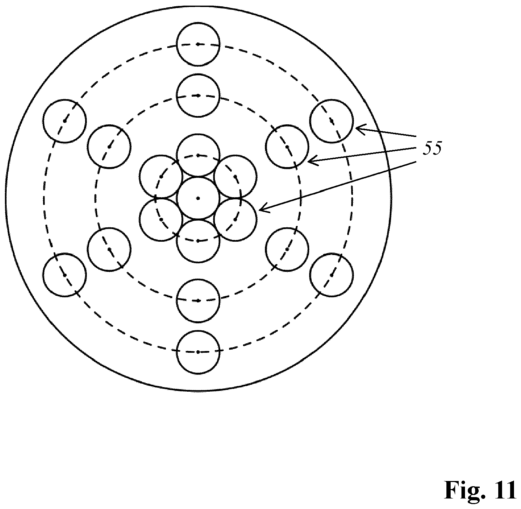

Eine alternative Ausführungsform einer Einrichtung, die geeignet ist zur Anpassung der Größe des Beleuchtungspunktmusters 2 ist in Figur 11 gezeigt.

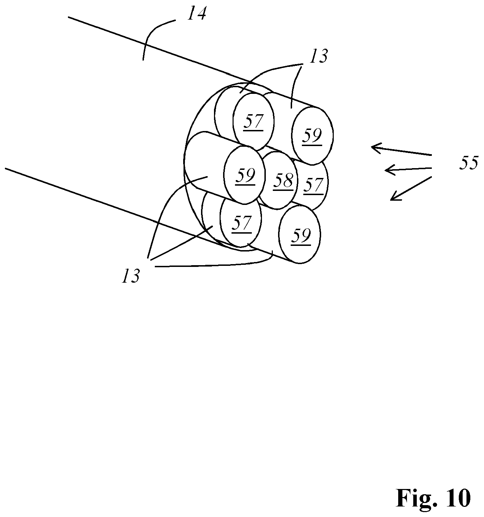

Figur 10 zeigt eine Detailansicht eines siebten Ausführungsbeispiels einer erfindungsgemäßen Vorrichtung zum punktförmigen Beleuchten einer Probe 1.

Bei diesem Ausführungsbeispiel fungieren die Auskoppelenden 55 der Lichtleitfasern 13 eines Lichtleitfaserbündels 14 als Einzellichtquellen 4. Die aus den Auskoppelenden 55 der Lichtleitfasern 13 austretenden (in dieser Figur nicht dargestellten) Beleuchtungslichtbündel 5 werden auf die (in dieser Figur nicht dargestellten) Beleuchtungspunkte 3 eines (in dieser Figur nicht dargestellten) dreidimensionalen Beleuchtungsmusters 2 abgebildet.

Die Auskoppelenden 55 der Lichtleitfasern 13 befinden sich axial nicht alle in derselben Ebene. Hierdurch wird der Tatsache Rechnung getragen, dass die Beleuchtungspunkte 3 des dreidimensionalen Beleuchtungspunktmusters 2 nicht nur lateral (x-y-Ebene) sondern auch in Richtung der optischen Achse 21 (z-Richtung) voneinander beabstandet sind. Einige der Auskoppelenden 55 der Lichtleitfasern 13 stehen in axialer Richtung weiter hervor als andere Auskoppelenden 55, was dazu führt, dass die Fokusse der Beleuchtungslichtbündel 5 in unterschiedlichen Fokusebenen innerhalb der Probe angeordnet sind, um die Beleuchtungspunkte 3 des dreidimensionalen Beleuchtungsmusters 5 beleuchten zu können.

Bei diesem Ausführungsbeispiel gibt es drei in einer gemeinsamen Axialebene endende erste Auskoppelenden 57, die an den Ecken eines ersten gleichseitigen Dreiecks angeordnet sind. Darüber hinaus gibt es zentral in der Mitte des Lichtleitfaserbündels 14 ein zweites Auskoppelende 58, das axial etwas weiter hervorsteht als die ersten Auskoppelenden 57. Außerdem gibt es drei in einer weiteren gemeinsamen Axialebene endende dritte Auskoppelenden 59, die ebenfalls an den Ecken eines zweiten gleichseitigen Dreiecks angeordnet sind und axial etwas weiter hervorstehen als das zweite Auskoppelende 58. Das erste gleichseitige Dreieck ist um 60 Grad gegenüber dem zweiten gleichseitigen Dreieck gedreht. Auf diese Weise kann ein Beleuchtungsmuster 2 erzeugt werden, bei dem die aus den ersten Auskoppelenden 57 und den dritten Auskoppelenden 59 austretenden Beleuchtungslichtbündel die Ecken eines Oktaeders beleuchten, während das aus dem zweiten Auskoppelende 58 austretende Beleuchtungslichtbündel den im Zentrum des Oktaeders liegenden Beleuchtungspunkt 3 beleuchtet.

Durch Verändern der Anzahl der Lichtleitfasern 13 des Lichtleitfaserbündels 14 und/oder durch Verändern der Anordnung der Auskoppelenden 55 der Lichtleitfaserbündel 14 sind andere Beleuchtungsmuster realisierbar. Beispielsweise ist die Beleuchtung an den Ecken eines Tetraeders möglich, insbesondere um einen Fluoreszenzmarker im Inneren des Tetraeders genau zu lokalisieren. Ganz allgemein sind weitgehend beliebige Beleuchtungsmuster 2 möglich, insbesondere auch solche, die einen oder mehrere Beleuchtungspunkte 3 im Inneren, insbesondere im Zentrum, einer dreidimensionalen geometrischen Figur aufweisen.

Figur 11 zeigt eine weitere vorteilhafte Anordnung von Auskoppelenden 55 der Lichtleitfasern 13 eines Lichtleitfaserbündels 14. Die Auskoppelenden 55 sind in einem Zentrum und auf konzentrischen Ringen um das Zentrum herum angeordnet. Diese Anordnung ermöglicht es zum einen, komplexere Beleuchtungspunktmuster 2 zu generieren, dessen Beleuchtungspunkte 3 sequentiell beleuchtet werden, zum anderen ermöglicht sie aber auch, eine Wiederholung der sequentiellen Beleuchtung von Beleuchtungspunkten 3 unter Beibehaltung der Form des Beleuchtungspunktmusters 2 mit einer Änderung der Größe des Beleuchtungspunktmusters 2 durchzuführen. Eine solche Anordnung kann als einzige Einrichtung, mit der der Abstand der Beleuchtungspunkte eines Beleuchtungspunktmusters zueinander eingestellt werden kann, oder zusätzlich zu einer weiteren Einrichtung mit der genannten Funktion, wie z.B. einer Zoomoptik 47, verwendet werden.

Die Beschreibung der Figuren wurde insbesondere mit Blick auf das MINFLUX-Verfahren beschrieben. Die gezeigten Anordnungen entfalten entsprechende Vorteile aber auch bei Anwendung anderer Verfahren wie z.B. dem Kleinfeld-Scan-Verfahren oder MINFLUX-Triangulation und STED-Technik kombinierenden Verfahren und sind für diese geeignet. Bei solchen Verfahren ist es zum Beispiel möglich, eines oder mehrere der Auskoppelenden 55 für die Beleuchtung mit Anregungslicht zu nutzen, während andere der Auskoppelenden 55 zur sequentiellen Beleuchtung mit Fluoreszenzverhinderungslicht, welches dann als Beleuchtungslicht fungiert, zu nutzen.

### Bezugszeichenliste:

- 1: Probe
- 2: Beleuchtungspunktmuster
- 3: Beleuchtungspunkte
- 4: Einzellichtquelle
- 5: Beleuchtungslichtbündel
- 6: Abbildungsoptik
- 7: Primärlichtquelle
- 8: Licht
- 9: Strahlteiler
- 10: SLM (Spatial Light Modulator)
- 11: Lichtintensitätsmodulator
- 12: Einkoppeloptik
- 13: Lichtleitfaser
- 14: Lichtleitfaserbündel
- 15: Austrittsende des Lichtleitfaserbündels 14
- 16: konjugierte Ebene
- 17: Phasenmodulator
- 18: Zwischenbildebene
- 19: Strahlablenkeinrichtung
- 20: einstellbares Spiegelpaar
- 21: optische Achse
- 22: Scanlinse
- 23: Tubuslinse
- 24: Mikroskopobjektiv
- 25: Leerposition
- 26: Lichtleitfaser
- 27: erster Beleuchtungspunkt
- 28: zweite Lichtleitfaser
- 29: zweiter Beleuchtungspunkt
- 30: dritter Beleuchtungspunkt
- 31: vierte Lichtleitfaser
- 32: vierter Beleuchtungspunkt
- 33: erster Fokus
- 34: zweiter Fokus
- 35: dritter Fokus
- 36: vierter Fokus
- 37: Einkoppeloptik
- 38: Bildebene
- 39: Hülse
- 40: Hauptstrahlteiler
- 41: Detektionslichtbündel
- 42: Linse
- 43: Detektions-Lichtleitfaser
- 44: dritte Lichtleitfaser
- 45: Detektions-Lichtleitfaserbündel
- 46: Hülse
- 47: Zoomoptik
- 48: erste Linse
- 49: einstellbaren Linse
- 50: zweite Linse
- 51: dritte Linse
- 52: Zwischenbildebene
- 53: Kollimator
- 54: Fokusebene
- 55: Auskoppelenden der Lichtleitfasern 13
- 56: Detektionslichtleitfaserbündel
- 57: erstes Auskoppelende
- 58: zweites Auskoppelende
- 59: drittes Auskoppelende

## Patentansprüche

1. Verfahren zum punktförmigen Beleuchten einer Probe (1) in einem Mikroskop, insbesondere einem MINFLUX-Mikroskop, mit Beleuchtungslicht, wobei die Probe (1) sequentiell an den Beleuchtungspunkten (3) eines vordefinierten Beleuchtungspunktmusters (2) beleuchtet wird, wobei eine laterale Ausdehnung des Beleuchtungspunktmusters (2) kleiner ist als die längste Wellenlänge des Beleuchtungslichtes und wobei die Beleuchtungspunkte (3) stets ausschließlich zeitlich versetzt beleuchtet werden, **dadurch gekennzeichnet, dass** jedem Beleuchtungspunkt (3) des Beleuchtungspunktmusters (2) eine eigene von mehreren Einzellichtquellen (4) zugeordnet ist und jeder Beleuchtungspunkt (3) mit dem Fokus eines Beleuchtungslichtbündels (5) der ihm zugeordneten Einzellichtquelle (4) beleuchtet wird.

2. Verfahren nach Anspruch 1, **dadurch gekennzeichnet, dass** das Verfahren wenigstens eines der nachfolgenden Merkmale umfasst:
a. wenigstens drei der Beleuchtungspunkte (3) des Beleuchtungspunktmusters (2), insbesondere alle Beleuchtungspunkte (3) des Beleuchtungspunktmusters (2), liegen auf einer Geraden,
b. alle Beleuchtungspunkte (3) des Beleuchtungspunktmusters (2) liegen in einer gemeinsamen Ebene, wobei das Verfahren optional zusätzlich beinhaltet, dass die Beleuchtungspunkte (3) des Beleuchtungspunktmusters ein kartesisches oder ein hexagonales Beleuchtungspunktmuster (2) bilden oder dass Beleuchtungspunkte (3) an den Ecken und optional im Zentrum eines Dreiecks oder eine Vierecks liegen.

3. Verfahren nach Anspruch 1, **dadurch gekennzeichnet, dass** die Beleuchtungspunkte (3) des Beleuchtungspunktmusters (2) nicht in einer gemeinsamen Ebene liegen, wobei das Verfahren optional zusätzlich eines der nachfolgenden Merkmale a und b beinhaltet:
a. die Beleuchtungspunkte (3) des Beleuchtungspunktmusters (2) sind an den Ecken und optional im Zentrum eines Tetraeders, eines Würfels oder eines Oktaeders angeordnet,
b. das Beleuchtungspunktmuster (2) ist ein dreidimensionales Beleuchtungspunktmuster (2), beispielsweise ein kubisches Beleuchtungspunktmuster (2) oder ein kubisch raumzentriertes Beleuchtungspunktmuster (2) oder ein kubisch flächenzentriertes Beleuchtungspunktmuster (2).

4. Verfahren nach einer der Ansprüche 1 bis 3, **dadurch gekennzeichnet, dass** die Beleuchtungspunkte (3) zusätzlich zur Beleuchtung mit dem Fokus des jeweiligen Beleuchtungslichtbündels (5) jeweils mit weiterem Licht beleuchtet werden, wobei das Verfahren optional zusätzlich eines oder mehrere der nachfolgenden Merkmale a bis i beinhaltet:
a. das weitere Licht weist eine andere Wellenlänge auf als das Beleuchtungslichtbündel (5),
b. jeweils ein Lichtbündel des weiteren Lichts weist einen Fokus auf und der Fokus des weiteren Lichtbündels (5) weist eine andere Form auf, als der Fokus des Beleuchtungslichtbündels (5),
c. jeweils ein Lichtbündel des weiteren Lichts weist einen Fokus auf, wobei der Fokus des weiteren Lichtbündels (5) eine zu dem Fokus des denselben Beleuchtungspunkt beleuchtenden Beleuchtungslichtbündels (5) komplementäre Intensitätsverteilung aufweist,
d. der Fokus des Beleuchtungslichtbündels (5) weist ein Intensitätsminimum auf und jeweils ein Lichtbündel des weiteren Lichts weist einen Fokus mit einem Intensitätsmaximum auf, welches jeweils dort ist, wo das Intensitätsminimum des Fokus des denselben Beleuchtungspunkt beleuchtenden Beleuchtungslichtbündels (5) ist,
e. das Beleuchtungslichtbündel (5) ist aus Anregungslicht und Fluoreszenzverhinderungslicht gebildet und die Beleuchtungspunkte (3) werden jeweils gleichzeitig mit dem Fokus des Anregungslichts und dem Fokus des Fluoreszenzverhinderungslichts beleuchtet,
f. das Beleuchtungslichtbündel (5) ist aus Anregungslicht und Fluoreszenzverhinderungslicht gebildet und die Beleuchtungspunkte (3) werden jeweils zeitlich versetzt mit dem mit dem Fokus des Anregungslichts und dem Fokus des Fluoreszenzverhinderungslichts beleuchtet,
g. das weitere Licht ist Fluoreszenzanregungslicht und das Beleuchtungslichtbündel (5) ist ein Fluoreszenzverhinderungslichtbündel,
h. das weitere Licht wird von den Einzellichtquellen (4) emittiert,
i. das weitere Licht wird von weiteren Einzellichtquellen (4) emittiert, wobei unterschiedlichen Beleuchtungspunkten (3) des Beleuchtungspunktmusters jeweils eine eigene von mehreren weiteren Einzellichtquellen (4) zugeordnet ist.

5. Verfahren nach einem der Ansprüche 1 bis 4, **dadurch gekennzeichnet, dass** der Fokus des Beleuchtungslichtbündels (5) ein Intensitätsminimum aufweist, wobei das Verfahren optional zusätzlich eines der nachfolgenden Merkmale beinhaltet:
a. das Intensitätsminimum ist eine dreidimensionale Struktur mit einem zentralen Intensitätsminimum, das sowohl ein laterales als auch ein axiales Intensitätsminimum ist,
b. das Intensitätsminimum ist ein 3D-Doughnut.

6. Verfahren nach einem der Ansprüche 1 bis 5, **dadurch gekennzeichnet, dass** das Verfahren wenigstens eines der nachfolgenden Merkmale a bis d beinhaltet:
a. die Beleuchtungslichtbündel (5) und/oder die weiteren Lichtbündel werden über Lichtwege, die unterschiedlich lange optische Weglängen aufweisen, zu den zugeordneten Beleuchtungspunkten (3) geleitet,
b. die Beleuchtungsdauer beträgt an jedem der Beleuchtungspunkte (3) des Beleuchtungspunktmusters (2) jeweils höchstens 50 µs, insbesondere höchstens 10 µs, ganz insbesondere höchstens 5 µs,
c. das Verfahren wird wiederholt durchgeführt, wobei die Beleuchtungsintensität und/oder die Intensitätsverteilung an den Beleuchtungspunkten (3) in Abhängigkeit von der Anzahl der bereits erfolgten Wiederholungen der sequentiellen Beleuchtung der Beleuchtungspunkte (3) verändert wird,
d. das Beleuchtungslicht jeder Einzellichtquelle (4) wird individuell hinsichtlich einer Lichtleistung und/oder einer Pulsdauer einer Wellenlänge und/oder einer Form des Fokus am Ort des zugeordneten Beleuchtungspunktes (3) eingestellt.

7. Verfahren nach einem der Ansprüche 1 bis 6, **dadurch gekennzeichnet, dass** das Verfahren wenigstens eines der nachfolgenden Merkmale a bis e beinhaltet:
a. jede der Einzellichtquellen (4) wird durch jeweils eine Primärlichtquelle (7), insbesondere einen Laser oder einen Halbleiterlaser, gebildet, die eines der Beleuchtungslichtbündel (5) emittiert,
b. die Einzellichtquellen (4) werden durch ein räumliches Aufspalten des Lichtes (8) einer Primärlichtquelle (7) in die Beleuchtungslichtbündel (5) gebildet, wobei das Verfahren optional zusätzlich beinhaltet, dass
die Primärlichtquelle (7) gepulstes Licht (8) emittiert und/oder dass
das räumliche Aufspalten dadurch erfolgt, dass unterschiedliche Lichtanteile des Lichtes (8) der Primärlichtquelle (7) in unterschiedliche Lichtleitfasern (13) eingekoppelt werden, und/oder dass
das räumliche Aufspalten durch Beleuchten eines Endes eines Lichtleitfaserbündels, das mehrere Lichtleitfasern (13) beinhaltet, mit dem Licht (8) der Primärlichtquelle (7) erfolgt,
c. jedes Beleuchtungslichtbündel (5) wird in eine eigene Lichtleitfaser (13) eingekoppelt, wobei das Verfahren optional zusätzlich beinhaltet, dass
die Auskoppelenden (55) der Lichtleitfasern (13) in die Beleuchtungspunkte (3) abgebildet werden, und/oder dass
die Lichtleitfasern (13) unterschiedlich lang sind,
d. das räumliche Aufspalten erfolgt durch Beleuchten mehrerer Spiegel eines Mikrospiegelarrays mit dem Licht (8) der Primärlichtquelle (7),
e. das Beleuchtungspunktmuster (2) wird relativ zur Probe (1) mittels einer einstellbaren Strahlablenkvorrichtung (19) vor und/oder während des Beleuchtens positioniert.

8. Verfahren zum Lokalisieren von Fluoreszenzmarkermolekülen in einer Probe, **dadurch gekennzeichnet, dass** die Probe gemäß einem Verfahren nach einem der Ansprüche 1 bis 7 beleuchtet wird und dass jeweils die von den beleuchteten Probenbereichen ausgehende Menge an Fluoreszenzlicht gemessen wird, wobei das Verfahren optional zusätzlich eines der folgenden Merkmale a oder b beinhaltet:
a. es wird jeweils der Abstand eines Fluoreszenzmarkermoleküls jeweils zu einem der Beleuchtungspunkte (3) unter Berücksichtigung der Intensitätsverteilung des den jeweiligen Beleuchtungspunkt (3) beleuchtenden Fokus des Beleuchtungslichtbündels (5) und/oder der Intensitätsverteilung des den jeweiligen Beleuchtungspunkt (3) beleuchtenden Fokus des weiteren Lichts und/oder der jeweiligen Intensitätsverteilungen der Fokusse des das Beleuchtungslichtbündel (5) ausbildenden Anregungs- und Fluoreszenzverhinderungslichts und der jeweils gemessenen Menge an Fluoreszenzlicht ermittelt,
b. die Position des Fluoreszenzmarkermoleküls relativ zu dem Beleuchtungspunktmuster (2) wird unter Berücksichtigung der Intensitätsverteilungen der die jeweiligen Beleuchtungspunkte (3) beleuchtenden Fokusse der Beleuchtungslichtbündels (5) und/oder der Intensitätsverteilungen der die jeweiligen Beleuchtungspunkte (3) beleuchtenden Fokusse des weiteren Lichts und/oder der jeweiligen Intensitätsverteilungen der jeweiligen Fokusse des die jeweiligen Beleuchtungslichtbündel (5) ausbildenden Anregungs- und Fluoreszenzverhinderungslichts und der jeweils gemessenen Menge an Fluoreszenzlicht ermittelt.

9. Vorrichtung, insbesondere zum Ausführen eines Verfahrens nach einem der Ansprüche 1 bis 8, zum punktförmigen Beleuchten einer Probe (1) in einem Mikroskop, insbesondere einem MINFLUX-Mikroskop, wobei die Vorrichtung dazu eingerichtet ist, die Probe an Beleuchtungspunkten (3) eines vordefinierten Beleuchtungspunktmusters (2) sequentiell zu beleuchten, wobei die laterale Ausdehnung des Beleuchtungspunktmusters (2) kleiner ist als die längste Wellenlänge des Beleuchtungslichtes, insbesondere kleiner als die Hälfte der längsten Wellenlänge des Beleuchtungslichtes, **dadurch gekennzeichnet, dass** jedem Beleuchtungspunkt (3) des Beleuchtungspunktmusters (2) eine eigene von mehreren Einzellichtquellen (4) zugeordnet ist, wobei jede der Einzellichtquellen (4) ein Beleuchtungslichtbündel (5) emittiert, das mittels einer Abbildungsoptik (6) auf den ihr zugeordneten Beleuchtungspunkt (3) fokussiert ist und dass eine Steuerungsvorrichtung dazu eingerichtet ist, das Beleuchten derart zu steuern, dass die einzelnen Beleuchtungspunkte (3) des Beleuchtungspunktmusters (2) stets ausschließlich zeitlich versetzt beleuchtet werden.

10. Vorrichtung nach Anspruch 9, **dadurch gekennzeichnet, dass** die Vorrichtung wenigstens eines der folgenden Merkmale a bis f aufweist:
a. die Einzellichtquellen (4) emittieren jeweils Beleuchtungslicht mehrerer Wellenlängen,
b. die Einzellichtquellen (4) emittieren relativ zueinander Beleuchtungslicht unterschiedlicher Wellenlängen,
c. die Beleuchtungspunkte (3) sind zusätzlich jeweils mit dem Fokus eines weiteren Lichtbündels beleuchtbar, wobei die weiteren Lichtbündel von den Einzellichtquellen (4) emittiert werden, wobei die Vorrichtung zusätzlich optional das Merkmal beinhaltet, dass das weitere Lichtbündel eine anderen Wellenlänge aufweist als das denselben Beleuchtungspunkt beleuchtende Beleuchtungslichtbündel (5),
d. der Fokus des weiteren Lichtbündels weist eine andere Form auf, als der Fokus des denselben Beleuchtungspunkt beleuchtenden Beleuchtungslichtbündels (5
e. der Fokus des weiteren Lichtbündels weist eine zu dem Fokus des denselben Beleuchtungspunkt beleuchtenden Beleuchtungslichtbündels (5) komplementäre Intensitätsverteilung auf,
f. das weitere Lichtbündel weist einen Fokus mit einem Intensitätsmaximum auf, welches dort ist, wo das Intensitätsminimum des Fokus des Beleuchtungslichtbündels (5) ist.

11. Vorrichtung nach Anspruch 9 oder 10, **dadurch gekennzeichnet, dass** die Vorrichtung wenigstens eines der nachfolgenden Merkmale a bis f aufweist:
a. die optischen Weglängen der Strahlengänge der Beleuchtungslichtbündel (5) und/oder der weiteren Lichtbündel sind unterschiedlich lang oder gemeinsam einstellbar oder individuell einstellbar,
b. die Beleuchtungsdauer ist an jedem der Beleuchtungspunkte (3) des Beleuchtungspunktmusters (2) einstellbar,
c. die Beleuchtungsdauer beträgt an jedem der Beleuchtungspunkte (3) des Beleuchtungspunktmusters (2) jeweils höchstens 50 µs, insbesondere höchstens 10 µs, ganz insbesondere höchstens 5 µs,
d. die Beleuchtungsintensität der Beleuchtungslichtbündel (5) und/oder die Intensitätsverteilung im Fokus der Beleuchtungslichtbündel (5) und/oder der weiteren Beleuchtungslichtbündel (5) ist einzeln oder gemeinsam einstellbar,
e. im Strahlengang jedes Beleuchtungslichtbündels (5) und/oder weiteren Lichtbündels (5) ist ein eigener Lichtintensitätsmodulator (11) angeordnet, wobei das Verfahren optional zusätzlich beinhaltet, dass
die Lichtintensitätsmodulatoren (11) als Flüssigkristall-SLM (10) oder als Mikrospiegelarray ausgebildet sind und/oder dass
die Lichtintensitätsmodulatoren (11) als akustooptische Lichtintensitätsmodulatoren (11) oder als elektrooptische Lichtintensitätsmodulatoren (11) oder als Flüssigkristallmodulatoren ausgebildet sind,
f. jede der Einzellichtquellen (4) ist durch jeweils eine Primärlichtquelle (7), insbesondere einen Laser oder einen Halbleiterlaser, gebildet.

12. Vorrichtung nach einem der Ansprüche 8 bis 11, **dadurch gekennzeichnet, dass** jedes Beleuchtungslichtbündel (5) durch eine Lichtleitfaser (13) geführt ist und/oder dass unterschiedliche Beleuchtungslichtbündel (5) stets durch unterschiedliche Lichtleitfasern (13) geführt sind.

13. Vorrichtung nach einem der Ansprüche 8 bis 12, **dadurch gekennzeichnet, dass** die Einzellichtquellen (4) durch ein räumliches Aufspalten des Lichtes einer Primärlichtquelle (7), insbesondere einer Primärlichtquelle (7), die gepulstes Licht (8) emittiert, in die Beleuchtungslichtbündel (5) gebildet sind.

14. Vorrichtung nach Anspruch 13, **dadurch gekennzeichnet, dass**
a. das räumliche Aufspalten durch das Einkoppeln unterschiedlicher Lichtanteile des Beleuchtungslichtes der Primärlichtquelle (7) in unterschiedliche Lichtleitfasern (13) realisiert ist, oder dass
b. das räumliche Aufspalten durch Beleuchten mehrerer Spiegel eines Mikrospiegelarrays mit dem Licht (8) der Primärlichtquelle (7) realisiert ist.

15. Vorrichtung nach Anspruch 12 oder nach Teil a des Anspruchs 14, **dadurch gekennzeichnet, dass** die Vorrichtung wenigstens eines der folgenden Merkmale a bis e aufweist:
a. die Lichtleitfasern (13) sind zu einem Lichtleitfaserbündel (14), insbesondere mit einer relativen Anordnung zueinander in einem kartesischen oder einem hexagonalen Raster, zusammengefasst,
b. die Lichtleitfasern (13) sind als Einzelmode-Fasern oder als polarisationserhaltene Fasern ausgebildet,
c. die Abbildungsoptik (6) bildet die Auskoppelenden (55) der Lichtleitfasern (13) in die Beleuchtungspunkte (3) ab,
d. die Lichtleitfasern (13) sind unterschiedlich lang,
e. die Auskoppelenden (55) wenigstens zweier Lichtleitfasern (13) sind in unterschiedlichen optischen Ebenen angeordnet,.

16. Vorrichtung nach einem der Ansprüche 9 bis 15, **dadurch gekennzeichnet, dass** die Vorrichtung wenigstens eines der folgenden Merkmale a bis d aufweist:
a. die Abbildungsoptik (6) weist einen Phasenmodulator (17) auf,
b. die Abbildungsoptik (6) beinhaltet eine Zoom-Optik, mittels der der Abbildungsmaßstab der Abbildungsoptik (6) veränderbar ist,
c. die Abbildungsoptik (6) weist eine in ihrer Brennweite einstellbare Linse (42) und/oder einen verformbaren Spiegel und/oder einen SLM (10) auf,
d. die Abbildungsoptik (6) fokussiert die wenigstens zwei Beleuchtungslichtbündel (5) in unterschiedliche optische Ebenen innerhalb der Probe (1).

17. Vorrichtung nach einem der Ansprüche 9 bis 16, **dadurch gekennzeichnet, dass** im Strahlengang der Beleuchtungslichtbündel (5) und/oder der weiteren Lichtbündel eine einstellbare Strahlablenkvorrichtung vorhanden ist, mittels der die Fokusse der Beleuchtungslichtbündel (5) und/oder der weiteren Lichtbündel zur Beleuchtung des Beleuchtungspunktmusters (2) relativ zur Probe (1) vor und/oder während eines Beleuchtungsvorganges positionierbar ist.

18. Verwendung einer Vorrichtung nach einem der Ansprüche 9 bis 17 zur dreidimensionalen Lokalisierung von Fluoreszenzmarkern, insbesondere in der MINFLUX-Mikroskopie.

## Claims

1. Method for point-wise illumination of a sample (1) in a microscope, in particular a MINFLUX microscope, with illumination light, wherein the sample (1) is illuminated sequentially at the illumination points (3) of a predefined illumination point pattern (2), wherein a lateral extent of the illumination point pattern (2) is smaller than the longest wavelength of the illumination light and wherein the illumination points (3) are always illuminated exclusively with a temporal offset, **characterized in that** a separate individual light source (4) of a plurality of individual light sources (4) is assigned to each illumination point (3) of the illumination point pattern (2) and each illumination point (3) is illuminated with the focus of an illumination light beam (5) of the individual light source (4) assigned thereto.

2. Method according to Claim 1, **characterized in that** the method comprises at least one of the following features:
a. at least three of the illumination points (3) of the illumination point pattern (2), in particular all illumination points (3) of the illumination point pattern (2), are located on a straight line,
b. all illumination points (3) of the illumination point pattern (2) are located in a common plane, wherein the method optionally additionally comprises that the illumination points (3) of the illumination point pattern form a Cartesian or a hexagonal illumination point pattern (2) or that illumination points (3) are located at the corners and optionally at the centre of a triangle or a square.

3. Method according to Claim 1, **characterized in that** the illumination points (3) of the illumination point pattern (2) are not located in a common plane, wherein the method optionally additionally comprises one of the following features a and b:
a. the illumination points (3) of the illumination point pattern (2) are arranged at the corners and optionally at the centre of a tetrahedron, of a cube or of an octahedron,
b. the illumination point pattern (2) is a three-dimensional illumination point pattern (2), for example a cubic illumination point pattern (2) or a body centred cubic illumination point pattern (2) or a face centred cubic illumination point pattern (2).

4. Method according to any of Claims 1 to 3, **characterized in that**, in addition to the illumination with the focus of the respective illumination light beam (5), the illumination points (3) are illuminated in each case with further light, wherein the method optionally additionally comprises one or more of the following features a to i:
a. the further light has a different wavelength than the illumination light beam (5),
b. in each case one light beam of the further light has a focus, and the focus of the further light beam (5) has a different shape than the focus of the illumination light beam (5),
c. in each case one light beam of the further light has a focus, wherein the focus of the further light beam (5) has an intensity distribution that is complementary to the focus of the illumination light beam (5) illuminating the same illumination point,
d. the focus of the illumination light beam (5) has an intensity minimum, and in each case one light beam of the further light has a focus with an intensity maximum in each case located where the intensity minimum of the focus of the illumination light beam (5) illuminating the same illumination point is,
e. the illumination light beam (5) is formed from excitation light and fluorescence prevention light, and the illumination points (3) are in each case illuminated simultaneously with the focus of the excitation light and the focus of the fluorescence prevention light,
f. the illumination light beam (5) is formed from excitation light and fluorescence prevention light, and the illumination points (3) are illuminated with the focus of the excitation light and the focus of the fluorescence prevention light in each case with a temporal offset,
g. the further light is fluorescence excitation light and the illumination light beam (5) is a fluorescence prevention light beam,
h. the further light is emitted by the individual light sources (4),
i. the further light is emitted by further individual light sources (4), wherein in each case one separate further individual light source (4) of a plurality of further individual light sources (4) is assigned to different illumination points (3) of the illumination point pattern.

5. Method according to any of Claims 1 to 4, **characterized in that** the focus of the illumination light beam (5) has an intensity minimum, wherein the method optionally additionally comprises one of the following features:
a. the intensity minimum is a three-dimensional structure with a central intensity minimum, which is both a lateral and also an axial intensity minimum,
b. the intensity minimum is a 3D doughnut.

6. Method according to any of Claims 1 to 5, **characterized in that** the method comprises at least one of the following features a to d:
a. the illumination light beams (5) and/or the further light beams are guided to the assigned illumination points (3) along light paths having optical path lengths of different lengths,
b. the illumination duration at each of the illumination points (3) of the illumination point pattern (2) is in each case at most 50 ps, in particular at most 10 ps, with particular preference at most 5 ps,
c. the method is performed repeatedly, wherein the illumination intensity and/or the intensity distribution at the illumination points (3) is changed depending on the number of repetitions of the sequential illumination of the illumination points (3) that have already taken place,
d. the illumination light of each individual light source (4) is set individually with regard to a light output and/or a pulse duration of a wavelength and/or a shape of the focus at the location of the assigned illumination point (3).

7. Method according to any of Claims 1 to 6, **characterized in that** the method comprises at least one of the following features a to e:
a. each of the individual light sources (4) is formed by in each case one primary light source (7), in particular a laser or a semiconductor laser, which emits one of the illumination light beams (5),
b. the individual light sources (4) are formed by spatially splitting the light (8) from one primary light source (7) into the illumination light beams (5), wherein the method optionally additionally involves that
the primary light source (7) emits pulsed light (8) and/or that
the spatial splitting takes place by coupling different light components of the light (8) from the primary light source (7) into different optical fibres (13), and/or that
the spatial splitting takes place by illuminating one end of an optical fibre bundle, which includes a plurality of optical fibres (13), with the light (8) from the primary light source (7),
c. each illumination light beam (5) is coupled into a separate optical fibre (13), wherein the method optionally additionally involves that
the coupling-out ends (55) of the optical fibres (13) are imaged into the illumination points (3), and/or that
the optical fibres (13) have different lengths,
d. the spatial splitting takes place by illuminating a plurality of mirrors of a micromirror array with the light (8) from the primary light source (7),
e. the illumination point pattern (2) is positioned relative to the sample (1) by means of a settable beam deflection apparatus (19) before and/or during the illumination.

8. Method for localizing fluorescent marker molecules in a sample, **characterized in that** the sample is illuminated in accordance with a method according to any of Claims 1 to 7 and **in that** in each case the amount of fluorescent light emanating from the illuminated sample regions is measured, wherein the method optionally additionally comprises one of the following features a and b:
a. the respective distance of a fluorescent marker molecule in each case from one of the illumination points (3) is ascertained taking into account the intensity distribution of the focus of the illumination light beam (5) illuminating the respective illumination point (3) and/or the intensity distribution of the focus of the further light illuminating the respective illumination point (3) and/or the respective intensity distributions of the foci of the excitation light and fluorescence prevention light forming the illumination light beam (5) and the respectively measured amount of fluorescent light,
b. the position of the fluorescent marker molecule relative to the illumination point pattern (2) is ascertained taking into account the intensity distributions of the foci of the illumination light beams (5) illuminating the respective illumination points (3) and/or the intensity distributions of the foci of the further light illuminating the respective illumination points (3) and/or the respective intensity distributions of the respective foci of the excitation light and fluorescence prevention light forming the respective illumination light beams (5) and the respectively measured amount of fluorescent light.

9. Apparatus, in particular for carrying out a method according to any of Claims 1 to 8, for point-wise illumination of a sample (1) in a microscope, in particular a MINFLUX microscope, wherein the apparatus is configured to sequentially illuminate the sample at illumination points (3) of a predefined illumination point pattern (2), wherein the lateral extent of the illumination point pattern (2) is smaller than the longest wavelength of the illumination light, in particular smaller than half the longest wavelength of the illumination light, **characterized in that** a separate individual light source (4) of a plurality of individual light sources (4) is assigned to each illumination point (3) of the illumination point pattern (2), wherein each of the individual light sources (4) emits an illumination light beam (5) which is focused by means of an imaging optical unit (6) at the illumination point (3) assigned thereto and **in that** a control apparatus is configured to control the illumination such that the individual illumination points (3) of the illumination point pattern (2) are always illuminated exclusively with a temporal offset.

10. Apparatus according to Claim 9, **characterized in that** the apparatus comprises at least one of the following features a to f:
a. the individual light sources (4) each emit illumination light having a plurality of wavelengths,
b. the individual light sources (4) emit illumination light having different wavelengths relative to one another,
c. the illumination points (3) are additionally illuminable in each case with the focus of a further light beam, wherein the further light beams are emitted by the individual light sources (4), wherein the apparatus additionally optionally comprises the feature that the further light beam has a different wavelength than the illumination light beam (5) illuminating the same illumination point,
d. the focus of the further light beam has a different shape than the focus of the illumination light beam (5) illuminating the same illumination point,
e. the focus of the further light beam has an intensity distribution that is complementary to the focus of the illumination light beam (5) illuminating the same illumination point,
f. the further light beam has a focus with an intensity maximum located where the intensity minimum of the focus of the illumination light beam (5) is.

11. Apparatus according to Claim 9 or 10, **characterized in that** the apparatus comprises at least one of the following features a to f:
a. the optical path lengths of the beam paths of the illumination light beams (5) and/or of the further light beams have different lengths or are settable together or individually,
b. the illumination duration is settable at each of the illumination points (3) of the illumination point pattern (2),
c. the illumination duration at each of the illumination points (3) of the illumination point pattern (2) is in each case at most 50 ps, in particular at most 10 ps, with particular preference at most 5 ps,
d. the illumination intensity of the illumination light beams (5) and/or the intensity distribution in the focus of the illumination light beams (5) and/or of the further illumination light beams (5) is settable individually or together,
e. a separate light intensity modulator (11) is arranged in the beam path of each illumination light beam (5) and/or further light beam (5), wherein the method optionally additionally involves that
the light intensity modulators (11) are designed as liquid crystal SLM (10) or as micromirror array, and/or that
the light intensity modulators (11) are designed as acousto-optic light intensity modulators (11) or as electro-optic light intensity modulators (11) or as liquid crystal modulators,
f. each of the individual light sources (4) is formed by in each case one primary light source (7), in particular a laser or a semiconductor laser.

12. Apparatus according to any of Claims 8 to 11, **characterized in that** each illumination light beam (5) is guided through an optical fibre (13) and/or **in that** different illumination light beams (5) are always guided through different optical fibres (13).

13. Apparatus according to any of Claims 8 to 12, **characterized in that** the individual light sources (4) are formed by spatially splitting the light from one primary light source (7), in particular a primary light source (7) which emits pulsed light (8), into the illumination light beams (5).

14. Apparatus according to Claim 13, **characterized in that**
a. the spatial splitting takes place by coupling different light components of the illumination light from the primary light source (7) into different optical fibres (13), or **in that**
b. the spatial splitting takes place by illuminating a plurality of mirrors of a micromirror array with the light (8) from the primary light source (7).

15. Apparatus according to Claim 12 or according to part a of Claim 14, **characterized in that** the apparatus comprises at least one of the following features a to e:
a. the optical fibres (13) are combined into one optical fibre bundle (14), in particular with a relative arrangement with respect to one another in a Cartesian or a hexagonal pattern,
b. the optical fibres (13) are designed as single-mode fibres or as polarization-maintaining fibres,
c. the imaging optical unit (6) images the coupling-out ends (55) of the optical fibres (13) into the illumination points (3),
d. the optical fibres (13) have different lengths,
e. the coupling-out ends (55) of at least two optical fibres (13) are arranged in different optical planes.

16. Apparatus according to any of Claims 9 to 15, **characterized in that** the apparatus comprises at least one of the following features a to d:
a. the imaging optical unit (6) has a phase modulator (17),
b. the imaging optical unit (6) includes a zoom lens, by means of which the imaging scale of the imaging optical unit (6) is changeable,
c. the imaging optical unit (6) has a lens (42) which is settable with respect to its focal length and/or a deformable mirror and/or an SLM (10),
d. the imaging optical unit (6) focuses the at least two illumination light beams (5) into different optical planes within the sample (1).

17. Apparatus according to any of Claims 9 to 16, **characterized in that** a settable beam deflection apparatus is present in the beam path of the illumination light beams (5) and/or of the further light beams, by means of which beam deflection apparatus the foci of the illumination light beams (5) and/or of the further light beams for illuminating the illumination point pattern (2) are positionable relative to the sample (1) before and/or during an illumination process.

18. Use of an apparatus according to any of Claims 9 to 17 for three-dimensional localization of fluorescence markers, in particular in MINFLUX microscopy.

## Revendications

1. Procédé d'éclairage par points d'un échantillon (1) dans un microscope, notamment un microscope MINFLUX, à l'aide d'une lumière d'éclairage, l'échantillon (1) étant éclairé séquentiellement au niveau des points d'éclairage (3) d'un motif de points d'éclairage prédéfini (2), une extension latérale du motif de points d'éclairage (2) étant inférieure à la longueur d'onde la plus longue de la lumière d'éclairage et les points d'éclairage (3) étant toujours éclairés exclusivement avec un décalage temporel, **caractérisé en ce que** chaque point d'éclairage (3) du motif de points d'éclairage (2) est associé à sa propre source de lumière individuelle parmi plusieurs sources de lumière individuelles (4) et chaque point d'éclairage (3) est éclairé avec le foyer d'un faisceau de lumière d'éclairage (5) de la source de lumière individuelle (4) qui lui est associée.

2. Procédé selon la revendication 1, **caractérisé en ce que** le procédé comprend au moins une des caractéristiques suivantes :
a. au moins trois des points d'éclairage (3) du motif de points d'éclairage (2), en particulier tous les points d'éclairage (3) du motif de points d'éclairage (2), sont situés sur une ligne droite,
b. tous les points d'éclairage (3) du motif de points d'éclairage (2) sont situés dans un plan commun, le procédé comprenant éventuellement en outre le fait que les points d'éclairage (3) du motif de points d'éclairage forment un motif de points d'éclairage cartésien ou hexagonal (2) ou que les points d'éclairage (3) sont situés aux coins et éventuellement au centre d'un triangle ou d'un quadrilatère.

3. Procédé selon la revendication 1, **caractérisé en ce que** les points d'éclairage (3) du motif de points d'éclairage (2) ne sont pas situés dans un plan commun, le procédé comprenant éventuellement en outre l'une des caractéristiques a et b suivantes :
a. les points d'éclairage (3) du motif de points d'éclairage (2) sont disposés aux coins et éventuellement au centre d'un tétraèdre, d'un cube ou d'un octaèdre,
b. le motif de points d'éclairage (2) est un motif de points d'éclairage tridimensionnel (2), par exemple un motif de points d'éclairage cubique (2) ou un motif de points d'éclairage (2) centré à la manière d'un cube dans l'espace ou un motif de points d'éclairage (2) centré à la manière d'un cube sur une surface.

4. Procédé selon l'une des revendications 1 à 3, **caractérisé en ce que** les points d'éclairage (3) sont éclairés chacun avec une lumière supplémentaire en plus de l'éclairage avec le foyer du faisceau de lumière d'éclairage respectif (5), le procédé comprenant éventuellement en outre une ou plusieurs des caractéristiques suivantes a à i :
a. la lumière supplémentaire a une longueur d'onde différente de celle du faisceau de lumière d'éclairage (5),
b. chaque faisceau de lumière de la lumière supplémentaire a un foyer et le foyer du faisceau de lumière supplémentaire (5) a une forme différente du foyer du faisceau de lumière d'éclairage (5),
c. chaque faisceau de lumière de la lumière supplémentaire a un foyer, le foyer de l'autre faisceau de lumière (5) présentant une distribution d'intensité qui est complémentaire au foyer du faisceau de lumière d'éclairage (5) éclairant le même point d'éclairage,
d. le foyer du faisceau de lumière d'éclairage (5) présente un minimum d'intensité et chaque faisceau de lumière de la lumière supplémentaire a un foyer présentant un maximum d'intensité qui correspond à chaque fois au minimum d'intensité du foyer du faisceau de lumière d'éclairage (5) qui éclaire le même point d'éclairage,
e. le faisceau de lumière d'éclairage (5) est formé d'une lumière d'excitation et d'une lumière d'inhibition de fluorescence et les points d'éclairage (3) sont chacun éclairés simultanément avec le foyer de la lumière d'excitation et le foyer de la lumière d'inhibition de fluorescence,
f. le faisceau de lumière d'éclairage (5) est formé d'une lumière d'excitation et d'une lumière d'inhibition de fluorescence et les points d'éclairage (3) sont chacun éclairés avec un décalage temporel avec le foyer de la lumière d'excitation et le foyer de la lumière d'inhibition de fluorescence,
g. la lumière supplémentaire est une lumière d'excitation de fluorescence et le faisceau de lumière d'éclairage (5) est un faisceau de lumière d'inhibition de fluorescence,
h. la lumière supplémentaire est émise par les sources de lumière individuelles (4),
i. la lumière supplémentaire est émise par d'autres sources de lumière individuelles (4), différents points d'éclairage (3) du motif de points d'éclairage étant chacun associés à leur propre source de lumière individuelle parmi plusieurs sources de lumière individuelles supplémentaires (4).

5. Procédé selon l'une des revendications 1 à 4, **caractérisé en ce que** le foyer du faisceau de lumière d'éclairage (5) présente un minimum d'intensité, le procédé comprenant éventuellement en outre l'une des caractéristiques suivantes :
a. le minimum d'intensité est une structure tridimensionnelle avec un minimum d'intensité central qui est un minimum d'intensité aussi bien latéral qu'axial,
b. le minimum d'intensité est un beignet 3D.

6. Procédé selon l'une des revendications 1 à 5, **caractérisé en ce que** le procédé comprend au moins une des caractéristiques suivantes a à d :
a. les faisceaux de lumière d'éclairage (5) et/ou les faisceaux de lumière supplémentaire sont guidés vers les points d'éclairage (3) associés sur des chemins de lumière qui ont des longueurs de chemin optique de différentes longueurs,
b. la durée d'éclairage au niveau de chacun des points d'éclairage (3) du motif de points d'éclairage (2) est au maximum de 50 ps, en particulier au maximum de 10 ps, notamment au maximum de 5 ps ,
c. le procédé est mis en œuvre de manière répétée, l'intensité d'éclairage et/ou la distribution d'intensité aux points d'éclairage (3) étant modifiées en fonction du nombre de répétitions déjà effectuées de l'éclairage séquentiel des points d'éclairage (3),
d. la lumière d'éclairage de chaque source de lumière individuelle (4) est réglée individuellement en termes de puissance lumineuse et/ou de durée d'impulsion d'une longueur d'onde et/ou de forme du foyer à l'emplacement du point d'éclairage (3) associé.

7. Procédé selon l'une des revendications 1 à 6, **caractérisé en ce que** le procédé comprend au moins une des caractéristiques suivantes a à e :
a. chacune des sources de lumière individuelles (4) est formée par une source de lumière primaire (7), en particulier un laser ou un laser à semi-conducteur, qui émet l'un des faisceaux de lumière d'éclairage (5),
b. les sources de lumière individuelles (4) sont formées par division spatiale de la lumière (8) d'une source de lumière primaire (7) en les faisceaux de lumière d'éclairage (5), le procédé comprenant éventuellement en outre le fait que
la source de lumière primaire (7) émet une lumière pulsée (8) et/ou que
la division spatiale est effectuée par injection par couplage de différentes composantes lumineuses de la lumière (8) de la source de lumière primaire (7) dans différentes fibres optiques (13) et/ou que la division spatiale est effectuée par éclairage d'une extrémité d'un faisceau de fibres optiques, qui contient plusieurs fibres optiques (13), avec la lumière (8) de la source de lumière primaire (7),
c. chaque faisceau de lumière d'éclairage (5) est injecté par couplage dans sa propre fibre optique (13), le procédé comprenant éventuellement en outre le fait que
les extrémités de sortie par couplage (55) des fibres optiques (13) sont reproduites dans les points d'éclairage (3), et/ou que
les fibres optiques (13) sont de longueurs différentes,
d. la division spatiale étant effectuée par éclairage de plusieurs miroirs d'un réseau de micro-miroirs avec la lumière (8) de la source de lumière primaire (7),
e. le motif de points d'éclairage (2) est positionné par rapport à l'échantillon (1) au moyen d'un dispositif de déviation de faisceau réglable (19) avant et/ou pendant l'éclairage.

8. Procédé de localisation de molécules de marqueurs par fluorescence dans un échantillon, **caractérisé en ce que** l'échantillon est éclairé selon un procédé selon l'une des revendications 1 à 7 et **en ce que** la quantité de lumière de fluorescence émanant des zones d'échantillon éclairées est mesurée, le procédé comprenant éventuellement en outre l'une des caractéristiques a ou b suivantes :
a. la distance entre une molécule de marqueur par fluorescence et l'un des points d'éclairage (3) est déterminée avec prise en compte de la distribution d'intensité du foyer du faisceau de lumière d'éclairage (5) qui éclaire le point d'éclairage respectif (3) et/ou de la distribution d'intensité du foyer de la lumière supplémentaire qui éclaire le point d'éclairage respectif (3) et/ou des distributions d'intensité respectives des foyers de la lumière d'excitation et d'inhibition de fluorescence qui forment le faisceau de lumière d'éclairage (5) et de la quantité de lumière de fluorescence respectivement mesurée,
b. la position de la molécule de marqueur par fluorescence par rapport au motif de points d'éclairage (2) est déterminée avec prise en compte des distributions d'intensité des foyers du faisceau de lumière d'éclairage (5) qui éclairent les points d'éclairage respectifs (3) et/ou des distributions d'intensité des foyers de la lumière supplémentaire qui éclairent les points d'éclairage respectifs (3) et/ou des distributions d'intensité respectives des foyers respectifs de la lumière d'excitation et d'inhibition de fluorescence qui forment les faisceaux de lumière d'éclairage respectifs (5) et de la quantité de lumière de fluorescence respectivement mesurée.

9. Dispositif, notamment de mise en œuvre d'un procédé selon l'une des revendications 1 à 8, pour effectuer l'éclairage par points d'un échantillon (1) dans un microscope, notamment un microscope MINFLUX, le dispositif étant conçu pour éclairer séquentiellement l'échantillon au niveau de points d'éclairage (3) d'un motif de points d'éclairage prédéfini (2), l'extension latérale du motif de points d'éclairage (2) étant inférieure à la longueur d'onde la plus longue de la lumière d'éclairage, en particulier inférieure à la moitié de la longueur d'onde la plus longue de la lumière d'éclairage, **caractérisé en ce que** chaque point d'éclairage (3) du motif de points d'éclairage (2) comporte sa propre source de lumière individuelle parmi plusieurs sources de lumière individuelles (4), chacune des sources de lumière individuelles (4) émettant un faisceau de lumière d'éclairage (5) qui est focalisé sur le point d'éclairage (3) qui lui est associé au moyen d'une optique de reproduction (6) et **en ce qu'**un dispositif de commande est conçu pour commander l'éclairage de telle sorte que les points d'éclairage individuels (3) du motif de points d'éclairage (2) ne soient toujours éclairés qu'avec un décalage temporel.

10. Dispositif selon la revendication 9, **caractérisé en ce que** le dispositif comporte au moins une des caractéristiques suivantes a à f :
a. les sources de lumière individuelles (4) émettent chacune une lumière d'éclairage de plusieurs longueurs d'onde,
b. les sources de lumière individuelles (4) émettent une lumière d'éclairage de longueurs d'onde différentes les unes des autres,
c. les points d'éclairage (3) peuvent également être éclairés par le foyer d'un faisceau de lumière supplémentaire, les faisceaux de lumière supplémentaire étant émis par les sources de lumière individuelles (4), le dispositif comprenant en outre éventuellement la caractéristique selon laquelle la faisceau de lumière supplémentaire a une longueur d'onde différente de celle du faisceau de lumière d'éclairage (5) qui éclaire le même point d'éclairage,
d. le foyer du faisceau de lumière supplémentaire a une forme différente du foyer du faisceau de lumière d'éclairage qui éclaire le même point d'éclairage (5),
e. le foyer du faisceau de lumière supplémentaire présente une distribution d'intensité complémentaire du foyer du faisceau de lumière d'éclairage (5) qui éclaire le même point d'éclairage,
f. le faisceau de lumière supplémentaire a un foyer présentant un maximum d'intensité qui correspond au minimum d'intensité du foyer du faisceau de lumière d'éclairage (5).

11. Dispositif selon la revendication 9 ou 10, **caractérisé en ce que** le dispositif comporte au moins une des caractéristiques suivantes a à f :
a. les longueurs de chemin optique des trajets de faisceaux des faisceaux de lumière d'éclairage (5) et/ou des faisceaux de lumière supplémentaires sont de longueurs différentes ou peuvent être réglées conjointement ou individuellement,
b. la durée d'éclairage est réglable au niveau de chacun des points d'éclairage (3) du motif de points d'éclairage (2),
c. la durée d'éclairage au niveau de chacun des points d'éclairage (3) du motif de points d'éclairage (2) est au maximum de 50 ps, en particulier au maximum de 10 ps, notamment au maximum de 5 ps,
d. l'intensité d'éclairage des faisceaux de lumière d'éclairage (5) et/ou la distribution d'intensité dans le foyer des faisceaux de lumière d'éclairage (5) et/ou des faisceaux de lumière d'éclairage supplémentaire (5) peuvent être réglées individuellement ou conjointement.
e. un modulateur d'intensité lumineuse (11) séparé est disposé dans le trajet de faisceau de chaque faisceau de lumière d'éclairage (5) et/ou de faisceaux de lumière supplémentaire (5), le procédé comprenant éventuellement en outre le fait que
les modulateurs d'intensité lumineuse (11) sont réalisés sous forme de SLM à cristaux liquides (10) ou sous forme de réseau de micro-miroirs et/ou que
les modulateurs d'intensité lumineuse (11) sont conçus comme des modulateurs d'intensité lumineuse acousto-optiques (11) ou comme des modulateurs d'intensité lumineuse électro-optiques (11) ou comme des modulateurs à cristaux liquides,
f. chacune des sources de lumière individuelles (4) est formée par une source de lumière primaire (7), en particulier un laser ou un laser à semi-conducteur.

12. Dispositif selon l'une des revendications 8 à 11, **caractérisé en ce que** chaque faisceau de lumière d'éclairage (5) est guidé par une fibre optique (13) et/ou **en ce que** différents faisceaux de lumière d'éclairage (5) sont toujours guidés par différentes fibres optiques (13).

13. Dispositif selon l'une des revendications 8 à 12, **caractérisé en ce que** les sources de lumière individuelles (4) sont formées par division spatiale de la lumière d'une source de lumière primaire (7), notamment d'une source de lumière primaire (7) qui émet une lumière pulsée (8), en les faisceaux de lumière d'éclairage (5).

14. Dispositif selon la revendication 13, **caractérisé en ce que**
a. la division spatiale est effectuée par injection par couplage de différentes composantes de lumière de la lumière d'éclairage de la source de lumière primaire (7) dans différentes fibres optiques (13), ou **en ce que**
b. la division spatiale est effectuée par éclairage de plusieurs miroirs d'un réseau de micro-miroirs avec la lumière (8) de la source de lumière primaire (7).

15. Dispositif selon la revendication 12 ou selon la partie a de la revendication 14, **caractérisé en ce que** le dispositif comporte au moins une des caractéristiques suivantes a à e :
a. les fibres optiques (13) sont combinées pour former un faisceau de fibres optiques (14), notamment disposées les unes par rapport aux autres suivant une trame cartésienne ou hexagonale,
b. les fibres optiques (13) sont réalisées sous la forme de fibres monomodes ou de fibres à polarisation maintenue,
c. l'optique de reproduction (6) reproduit les extrémités de sortie par couplage (55) des fibres optiques (13) dans les points d'éclairage (3),
d. les fibres optiques (13) sont de longueurs différentes,
e. les extrémités de sortie par couplage (55) d'au moins deux fibres optiques (13) sont disposées dans des plans optiques différents.

16. Dispositif selon l'une des revendications 9 à 15, **caractérisé en ce que** le dispositif comporte au moins une des caractéristiques suivantes a à d :
a. l'optique de reproduction (6) comporte un modulateur de phase (17),
b. l'optique de reproduction (6) contient une optique zoom qui permet de modifier l'échelle de reproduction de l'optique de reproduction (6),
c. l'optique de reproduction (6) comporte une lentille (42) dont la distance focale est réglable et/ou un miroir déformable et/ou un SLM (10),
d. l'optique de reproduction (6) focalise les au moins deux faisceaux de lumière d'éclairage (5) dans différents plans optiques à l'intérieur de l'échantillon (1).

17. Dispositif selon l'une des revendications 9 à 16, **caractérisé en ce qu'**un dispositif de déviation de faisceau réglable est présent dans le trajet de faisceau des faisceaux de lumière d'éclairage (5) et/ou des faisceaux de lumière supplémentaires et permet de positionner les foyers des faisceaux de lumière d'éclairage (5) et/ou des faisceaux de lumière supplémentaires, qui sont destinés à éclairer le motif de points d'éclairage (2), par rapport à l'échantillon (1) avant et/ou pendant un processus d'éclairage.

18. Utilisation d'un dispositif selon l'une des revendications 9 à 17 pour effectuer la localisation tridimensionnelle de marqueurs par fluorescence, notamment en microscopie MINFLUX.
